Europäisches Patentamt

European Patent Office

Office européen des brevets

(19)

(11) **EP 0 880 133 A1**

(12) **EUROPEAN PATENT APPLICATION**

(43) Date of publication:
**25.11.1998 Bulletin 1998/48**

(51) Int Cl.⁶: **G11B 19/12**

(21) Application number: **98303868.8**

(22) Date of filing: **15.05.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.05.1997 JP 127732/97**

(71) Applicant: **SONY CORPORATION Tokyo 141 (JP)**

(72) Inventors:
• **Yamamoto, Masanobu, c/o Sony Corporation Shinagawa-ku, Tokyo 141 (JP)**
• **Saito, Masaki, c/o Sony Corporation Shinagawa-ku, Tokyo 141 (JP)**

(74) Representative: **Pilch, Adam John Michael et al D. YOUNG & CO., 21 New Fetter Lane London EC4A 1DA (GB)**

(54) **Optical disk apparatus and accessing methods, and disk cartridges for housing optical disks**

(57)    An optical disk unit (10) and cartridge are capable of reading/recording desired data by thermomagnetic recording, local heating or other techniques via an optical system (11) with a large numerical aperture and a small working distance. Magnetic field generating coils are arranged on the laser beam irradiating side and generate the magnetic field for thermomagnetic recording. The type of optical disk (12), i.e. whether it is a thermomagnetic disk, a local heating disk, etc., is identified by a disk discriminator (50) on the basis of disk identification indicia, and the laser beam in the optical system (11) is switched accordingly.

# F I G. 1

**Description**

The present invention relates to optical disk apparatus and accessing methods, and disk cartridges for housing optical disks, suitable for recording or reading desired data, particularly high density data, for example, from a disk cartridge.

Heretofore, an optical disk known as a digital versatile disk (DVD) has been proposed for recording information in high density. The DVD standard records 2.6 GB on the single side of the DVD by irradiating a laser beam with a wavelength of 650 nm by an optical system with a numerical aperture of 0.6. With the DVD system, video signals representing a one hour program can be recorded on the single side.

The optical disk recording technique which records data by a laser beam that locally heats the recording side of the disk may or may not use thermomagnetic recording. In thermomagnetic recording, an optical head and a modulating coil are arranged opposite each other with an optical disk therebetween. A modulating magnetic field is applied by the modulating coil according to the data to be recorded.

In non-tnermomagnetic recording, a phase-change type optical disk whose crystal structure (representative of the information being recorded) is changed by local heating of the optical disk. Here, the luminous energy of the laser beam is set to optimum levels determined by factors including ambient temperature, heat characteristics which vary for different optical disks and the like.

The typical DVD is constituted by sandwiching two disk substrates back-to-back with the information recording layer on either surface of the substrates. Problematically, it is difficult to record on either substrate when the optical head and modulating coil are on opposite sides of the optical disk; particularly because it is difficult to successfully apply a modulating magnetic field at the correct impinging position of the irradiating laser beam. As a result, the phase-change type optical disk is typically employed in a write-once system.

It is desirable to provide a magneto-optical disk which can be used even when information is recorded on both sides of the optical disk and to provide a recording/reading system that is operable with various types of optical disks.

An aim of at least an embodiment of the present invention is to provide a recording/reading system that is operable with various types of optical disks. Preferably, a magneto-optical disk is provided which can be used even when information is recorded on both sides of the optical disk. The preferred embodiment provides a cartridge for housing the optical disk with an identifying part provided on the outside wall of the cartridge for discriminating the type of optical disk.

In accordance with an aspect of the present invention, an optical disk unit and cartridge are provided for recording data on an optical disk by thermomagnetic recording or by local heating, as by the user.

In that aspect of the present invention, a laser beam is irradiated via an optical system which has a working distance of 560μm or less and a numerical aperture of 0.70 or more. The optical system selectively processes the data signal reflected from the optical disk based upon the identification of that optical disk.

According to one embodiment of the present invention, an optical head irradiates a laser beam onto the optical disk as a function of a predetermined driving signal, and outputs a first regenerative signal (whose signal level varies according to the plane of polarization of returned light reflected from the disk) and a second regenerative signal whose signal level varies according to the luminous energy of the returned light. A modulating magnetic field is applied to the laser beam from the same side as that which irradiates the disk, and the luminous energy of the irradiating laser beam is set as a function of the type of optical disk being used. With this arrangement, data recorded on the optical disk is read by switching the magnetic field or selectively processing the first or second regenerative signal based upon the identified type of disk.

As another aspect of the present invention a cartridge for housing the optical disk has an identifying part provided on the outside wall of the cartridge for discriminating the type of optical disk. Information is thermomagnecically recorded on a vertically magnetized film by applying a modulating magnetic field from the same side of the disk as the impinging laser beam or, alternatively, information may be recorded by local heating from the laser beam, depending upon the type of optical disk as discriminated by the identifying part.

If the working distance of the optical head is 560μm or less and the numerical aperture is 0.70 or more, a small-sized head can be used.

Other aspects of the present invention are set out in claims 1, 3, 12, 14, 16, 25, 27 and 29.

The invention will now be described by way of example with reference to the accompanying drawings, throughout which like parts are referred to by like references, and in which:

Fig. 1 is a block diagram of a first embodiment of an optical disk unit of the present invention;
Fig. 2 is a block diagram of a disk mastering device embodying the present invention;
Fig. 3 is a schematic plan view for explaining zoning in accordance with the present invention;
Figs. 4A-4C are schematic drawings showing a disk sector according to the present invention;
Figs. 5A and 5B are drawings showing an optical disk generated by the mastering device of the present invention;
Fig. 6 is a block diagram showing a driving system for the optical disk unit of the present invention;

Fig. 7 is a schematic diagram of an optical head in the optical disk unit of the present invention;

Fig. 8 is a sectional view showing the construction of an objective lens of the optical head;

Figs. 9A-9C are characteristic curves for explaining the driving of an optical disk by the optical disk unit of the present invention;

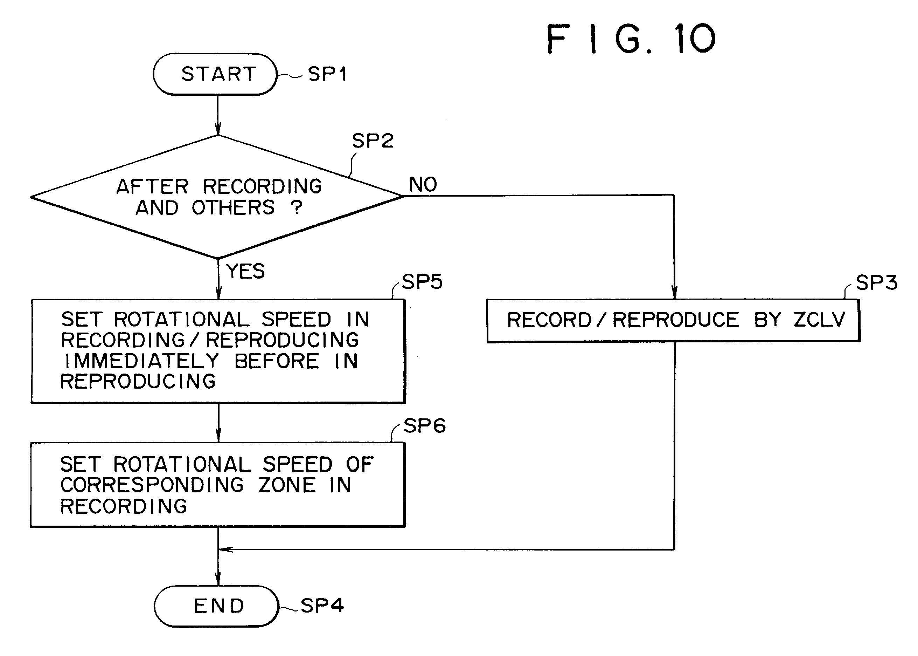

Fig. 10 is a flowchart showing the operation of a system control circuit in the optical disk unit of the present invention;

Fig. 11 is a schematic explanation of sector structure in the optical disk of the present invention;

Fig. 12 is a schematic representation of an ECC block recorded on the optical disk of the present invention;

Fig. 13 is a schematic representation of the frame structure used in the present invention;

Fig. 14 is a schematic diagram of video and audio signal flow in two channels as used in the present invention;

Fig. 15 is an exploded perspective drawing showing an optical disk cartridge in accordance with the present invention;

Fig. 16 is a plan view of the cartridge of the present invention;

Fig. 17 is a perspective view of the shutter and the cartridge of the present invention;

Fig. 18 is a plan view of the shutter and the cartridge of the present invention;

Fig. 19 is a plan view of the movable limiting mechanism in the cartridge of the present invention;

Fig. 20 is a plan view of the limiting mechanism when a button 70A is pressed;

Fig. 21 is another plan view of the limiting mechanism when the button is pressed;

Fig. 22 is a further plan view of the limiting mechanism showing movement of the shutter;

Fig. 23 is yet another plan view of the movable limiting mechanism;

Fig. 24 is a still further plan view of the limiting mechanism when button 70B is pressed;

Fig. 25 is another plan view of the limiting mechanism showing movement of the shutter;

Fig. 26 is a perspective view of a loading mechanism of the optical disk unit;

Fig. 27 is a block diagram for explaining the discrimination of an optical disk;

Fig. 28 is a sectional view of another embodiment of the objective lens in an optical head of the optical disk unit; and

Fig. 29 is a sectional view of a further embodiment of the objective lens in an optical head of the optical disk unit.

Referring to the drawings, embodiments of the present invention will be described in detail below.

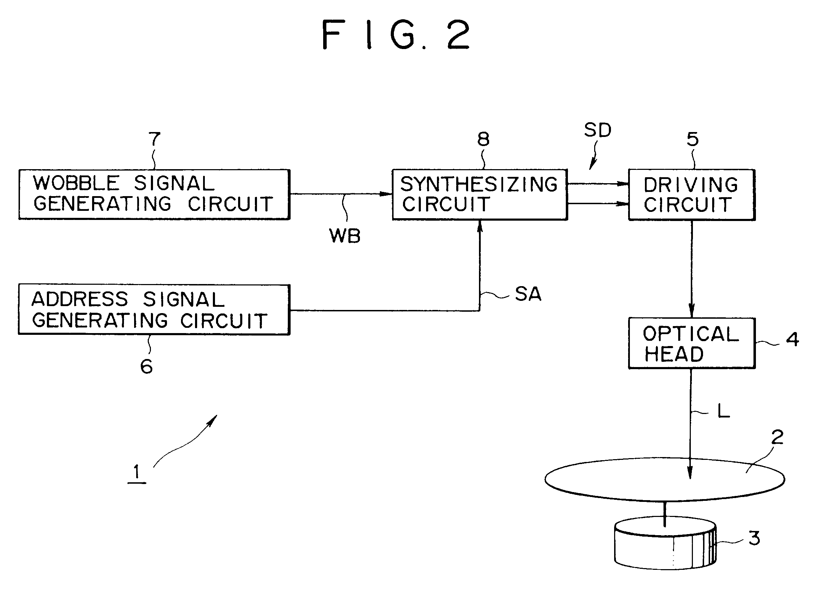

Fig. 2 is a block diagram showing a mastering device embodying the present invention. In the mastering process, a disk base 2 is exposed to a laser beam and an optical disk is manufactured from the disk base 2. The disk base 2 is formed by applying a resist on the surface of a glass substrate, for example, and rotating the glass substrate by a spindle motor 3 at a fixed angular velocity.

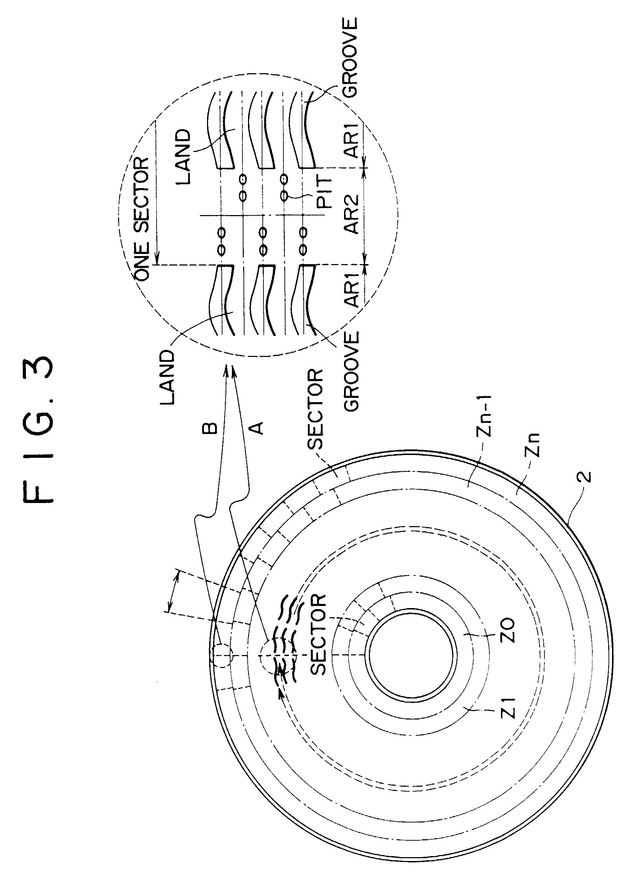

An optical head 4 irradiates a laser beam L on the disk base 2 while a predetermined thread mechanism displaces the optical head from the inner diameter of the disk base 2 to the outer diameter thereof in synchronization with the rotation of the disk base. The optical head 4 forms tracks helically from the inner diameter to the outer diameter of the disk base. Preferably, the optical head 4 is controlled by the thread mechanism so that the optical head is displaced by approximately 1.0 μm during one rotation of the disk base 2 is rotated once to form tracks at the track pitch of 0.5 μm using land-groove recording. The mastering technique which etches tracks in the form of alternating lands and grooves is shown in Fig. 3. The track pitch in the present invention is 0.67 times the track pitch in DVD (the latter is 0.74 μm).

The mastering device of the present invention provides a mastered optical disk with a track recording density of 0.21 μm/bit and a data recording capacity of 8 giga-bytes or more, as shown by the following expression:

$$4.7 \text{ x } \frac{0.74 \text{ x } 0.267}{0.5 \text{ x } 0.21} \geq 8 \tag{1}$$

where 4,7 denotes the storage capacity (GB) of DVD and 0.74 and 0.267 respectively denote the track pitch (μm) and the track recording density (μm/bit) of DVD. In expression (1) above, the storage capacity of 8GB for the present invention, which records by using the same data processing as DVDs, is shown to be significantly greater than the prior art.

When the optical head 4 generates an optical disk from the disk base 2, the spot diameter of the laser beam L is set so that the width of a groove formed by the exposure of the disk base to the laser beam L and the width of a land between adjacent grooves are approximately equal. Preferably, the luminous energy of the laser beam spot is set so that an effective exposure range by the laser beam is increased approximately 120% for the width of a groove. A driving circuit 5 drives the optical head 4 in response to a driving signal SD in Fig. 2. Meanwhile, the driving circuit 5 switches the driving condition for the optical head 4 at a timing synchronized with the rotation of the disk base 2 so that, as shown in Fig. 3, the disk base 2 is divided into zones (ZO to Zn), with each zone in Fig. 3 comprising a plurality of tracks, each track being either a groove or a land.

Preferably, the mastering device 1 forms tracks on the disk base 2 in a radial area between 24 and 58 mm of a 120 mm diameter optical disk, which is the same size as a compact disc. At this time, the driving circuit 5 switches the driving condition for the optical head 4 so that a sector structure is formed by dividing the information record side of the disk into radial areas. The information record side is divided concentrically by sequentially changing the timing in a stepwise manner to form, for example, fourteen zones Z0 to Zn.

The driving circuit 5 forms nine sectors on one track in the innermost zone Z0 and increments the number of sectors on a track by one as the optical head is sequentially displaced from the inner disk diameter to the outer diameter. In each sector, a header is allocated to an address area AR2 and the following residual area AR1 is allocated to a user area as shown by the enlarged boundary (A,B) between sectors in Fig. 3. The driving circuit 5 displaces the laser beam position on the disk according to the driving signal SD in the user area AR1 under the control of a system control circuit (not shown) and thereby, forms a groove which is "wobbled" in the user area AR1.

In the address area AR2, the radial displacement of the laser beam position is inhibited in the first half of the address area AR2 and the luminous energy of the laser beam is intermittently increased according to the driving signal SD so that a pit sequence is formed in the center of a track between grooves. In the second half of the address area AR2, the laser beam irradiated position is displaced such that the irradiated position is at the track center between lands, and the luminous energy of the laser beam is intermittently increased in response to driving signal SD so that a pit sequence is formed in the track center between the lands.

With the present invention, the driving circuit 5 records the address data of a sector of the next-following groove as a pit sequence in the track center of the groove in the first half of the address area AR2. The address data of a sector in the next-following land is recorded as a pit sequence in the corresponding track center of the land in the second half of the address area AR2.

The driving circuit 5 sets the luminous energy of the laser beam having a wavelength of 650 nm so that the depth of a pit and a groove is 1/6 to 1/5 of a wavelength when an optical disk is produced from the disk base.

A wobble signal generating circuit 7 outputs a sinusoidal wobble signal WB with a predetermined frequency synchronized with the rotation of the disk base 2. The wobble signal generating circuit sequentially increases the frequency of the wobble signal stepwise as the laser beam is displaced radially outward corresponding to the zoning shown in Fig. 3, thereby forming a groove exhibiting 397 cycles per sector.

The length of the address area (header area) AR2 of the preferred embodiment accomodates five wobble cycles of a groove, and a groove on a track in the innermost zone Z0 is formed of 3573 cycles, with the number of cycles per track being sequentially increased by 397 cycles per track from zone to zone. In this embodiment, 25 bytes of data is allocated in the user area AR1 for one wobble cycle of the groove and one cycle is approximately 42μm.

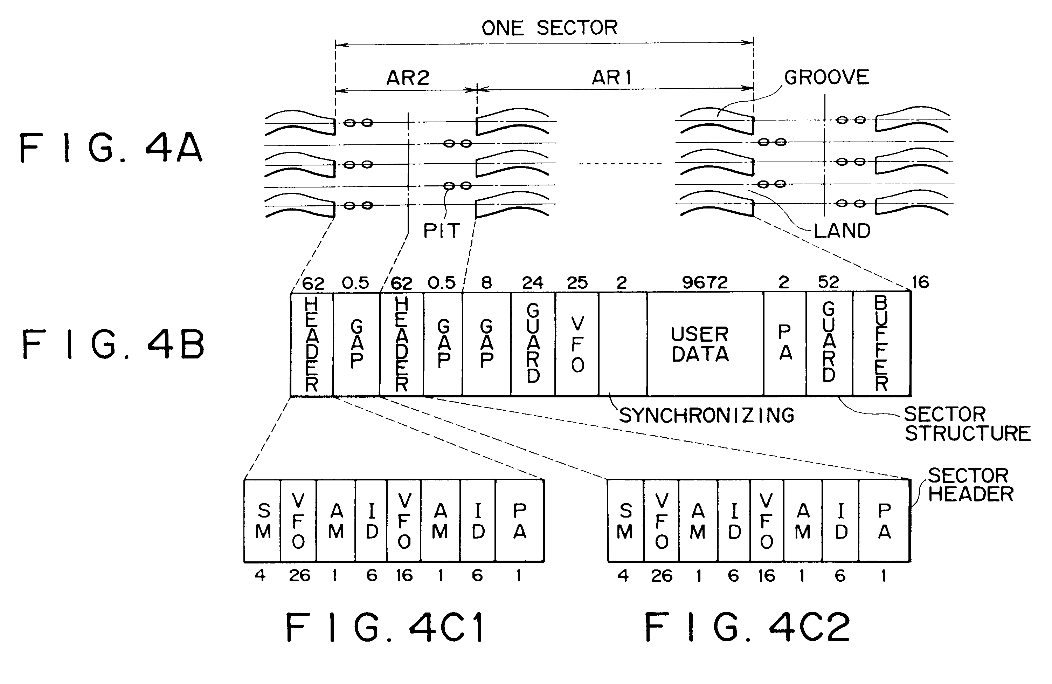

An address signal generating circuit 6 generates an address signal SA which varies in value corresponding to the displacement of the optical head 4. That is, the address signal generating circuit 6 receives a timing signal (composed of a frequency generated signal FG), for example, synchronized with the rotation of the disk base 2 and generated from the spindle motor 3 and counts the timing signal. Preferably, the address signal generating circuit 6 generates the address data ID of a laser beam position such as shown in Figs. 4A, 4C1 and 4C2, wherein the address data ID is formed of six bytes.

The address signal generating circuit 6 adds a 4-byte sector mark SM, 26-byte timing data VFO for synchronization, a 1-byte address mark AM and a 1-byte postamble PA to the address data ID so as to generate the 62-byte sector header shown in Figs. 4B, 4C1 and 4C2 allocated to the front half and the second half, respectively, of the address area AR2. The sector mark SM represents the start of the sector header. The timing data VFO controls synchronization by locking a phase-locked loop (PLL) circuit in the optical disk unit. The address mark AM is listed as a synchronizing signal of an address and one byte is allocated thereto. The same address data ID is recorded twice in the header to enhance reliability and includes 2 bytes of an error detecting code. The postamble PA is arranged to set the polarity of a read signal following the reading of the header.

The address signal generating circuit 6 converts a sector header generated as described above to a serial data row, modulates the serial data raw by a predetermined format and outputs the modulated signal as an address signal SA at a timing corresponding to the scanning position of the laser beam L.

A synthesizing circuit 8 (Fig. 2) synthesizes the wobble signal WB and the address signal SA, generates a driving signal SD composed of a displacing signal for radially displacing the optical system of the optical head 4 and a luminous energy control signal for controlling the luminous energy or the laser beam, and outputs the driving signal SD to the driving circuit 5.

Information recorded on the optical disk that is produced from the disk base 2 is zoned concentrically and formatted so that the number of sectors in a track is sequentially increased from the inner diameter to the outer diameter of the disk. The address area AR2 is formed at the head of each sector and the desired (or user) data is recorded in the following user area AR1.

The user area AR1 is shown in Fig. 4B as including 24 bytes for the guard area, 25 bytes for the VFO timing data, two bytes for synchronizing data, 9672 bytes for user data, one byte for the postamble (PA), 52 bytes for the guard area and 16 bytes for the buffer area. A gap of 0.5 bytes ends the header and a gap of 8 bytes precedes the user information. The gap functions as an area for separating a land and a groove and as an area for switching the luminous energy of a laser beam. The guard area is adapted to control the continuity of the recorded material of the disk when data is overwritten and to enhance the overwrite operation of the recording area particularly when a phase-change medium is the recording medium. The synchronizing bytes are used to lock a PLL circuit in the optical disk unit. The postamble is used to set the polarity of the reading signal. The buffer is a redundant area for absorbing jitter caused by decentering and other aberrations in a recording area.

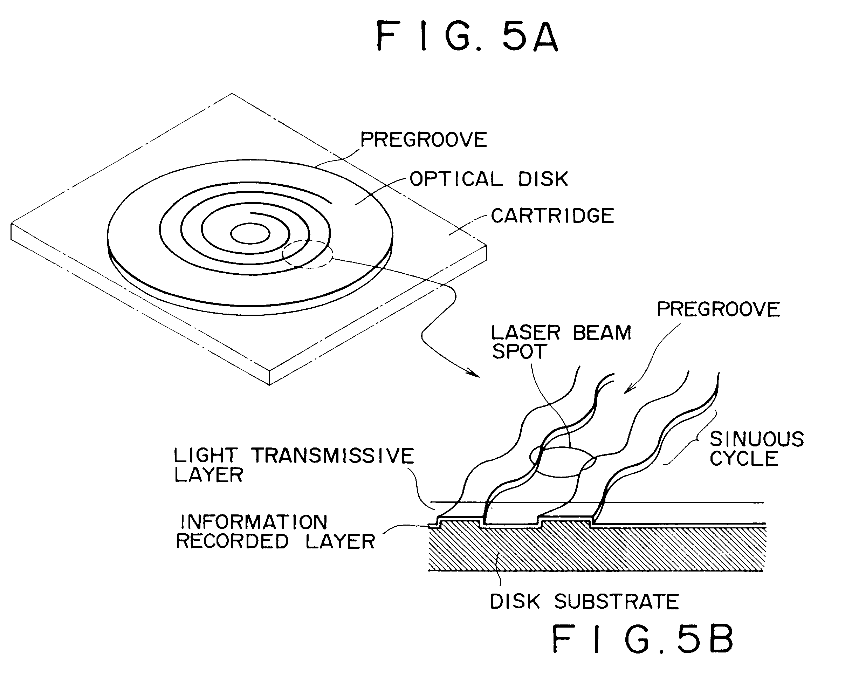

Fig. 5A is a perspective view of an optical disk mastered from the disk base 2 and Fig. 5B is a sectional view showing lands surrounding a groove. The optical disk is formed so that it is 1.2 mm thick. The information record side of the phase-change type optical disk is generated by sequentially forming an aluminum film, a ZnS-SiO2 film, a GeSbTe film and a ZnS-SiO2 film on a disk substrate. The information record side of a magneto-optical disk is generated by sequentially forming an aluminum film, a SiN film, a TbFeCo film and a SiN film on the disk substrate; and, in the case of a write-once optical disk, the information record side is generated by sequentially forming an aluminum or gold sputtered film and a predetermined organic pigment film on the disk substrate.

A light transmissive layer for passing the laser beam to the information record side is formed on the outermost layer of the information record side with a thickness of approximately 0.1 mm. With this arrangement, the effect of skew of the optical disk is effectively avoided and desired data can be readily recorded on or read from the information record side with a laser beam transmitted from an optical system having a high numerical aperture. The optical disk preferably has a diameter of 120 mm and an information record area defined by a radius of 24 to 58 mm.

The optical disk is housed in a cartridge having means thereon so that the type of optical disk therein can be discriminated (e.g. thermomagnetic or local heating). The cartridge including the optical disk is easily loaded into the optical disk unit. The cartridge protects the optical disk from the effects of dust and other particles.

If the optical disk is a phase-change type optical disk, desired data can be recorded by locally changing the crystal structure of the information record of the disk side by using a laser beam, and recorded data can be read by detecting changes in the luminous energy of returned or reflected light.

The magneto-optical disk of the present invention is formed so that the desired data can be thermomagnetically recorded by applying a magnetic field on the laser beam impinging side of the disk; and recorded data can be read utilizing the effect of magnetic force by detecting the plane of polarization of returned light from the reflected laser beam. Further, in the case of a write-once optical disk, the magneto-optical disk is formed so that data can be recorded by local distortion of the information record side by irradiating a laser beam thereto. Thereafter, the recorded data can be read by detecting the change of the luminous energy of returned light from the reflected laser beam.

Preferably, in the optical disk of the present invention, the disk base 2 is rotated with fixed angular velocity and the frequency of the wobble signal is sequentially switched stepwise from zone to zone to form the groove by the wobble signal WB. Of course, the wobble cycle of the groove is fixed in each zone.

Two types of optical disks may be formed: one in which the information record side is formed only on a single side and the other in which the information record side is formed on both sides. The optical disk in which the information record side is formed on both sides has thickness of 1.2 mm and the thickness of each light transmissive layer is 0.1 mm. This embodiment may be thought of as sandwiching optical disks with thin disk substrates.

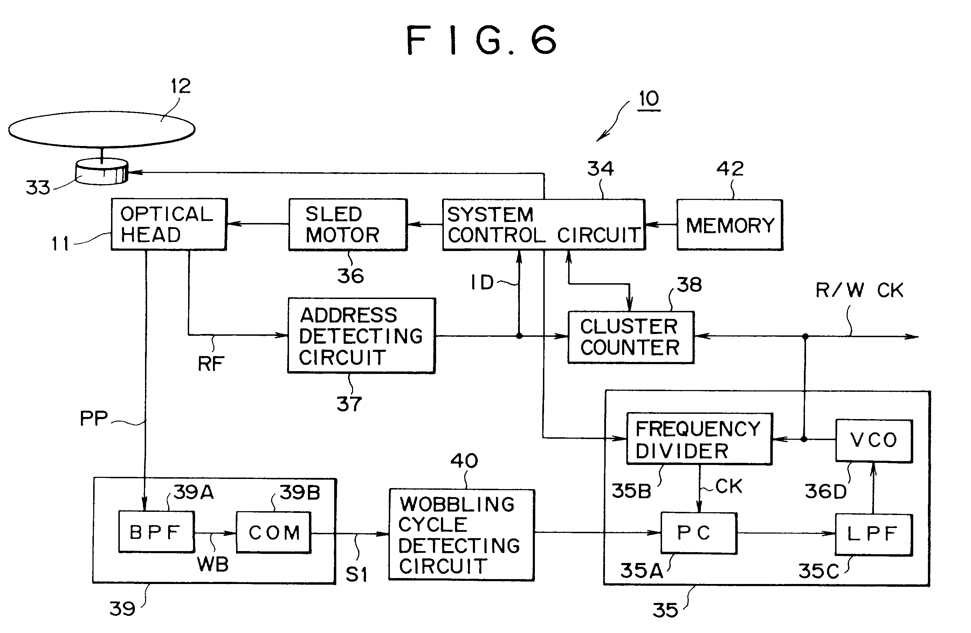

Fig. 6 is a block diagram showing a system for processing the wobble signal in the optical disk unit 10 which accesses the optical disk that has been manufactured in accordance with the embodiments described above. In the optical disk unit 10, a laser beam is irradiated on optical disk 12 by an optical head 11 which also receives the returned light from the reflected beam.

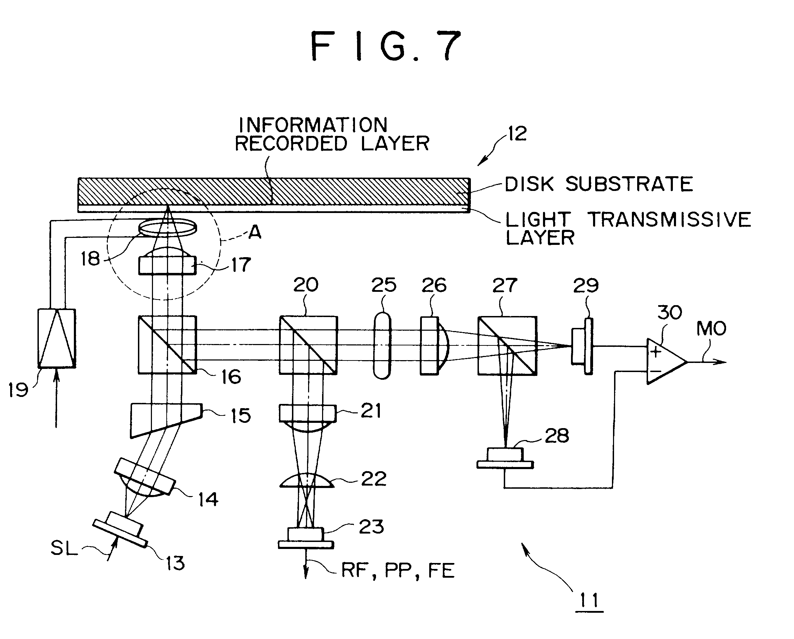

As shown in Fig. 7, in the optical head 11, a semiconductor laser 13 is driven by a predetermined driving signal SL to irradiate a laser beam with a wavelength of 650 nm. The semiconductor laser 13 irradiates the laser beam with fixed luminous energy for reading data from the optical disk. In recording, the luminous energy of the laser is intermittently increased to form a pit or a mark on the information record side of the optical disk 12.

A collimator lens 14 converts the laser beam irradiated by the semiconductor laser 13 to parallel rays and a shaping lens 15 compensates for astigmatism of the laser beam. Thereafter, the laser beam is incident on an objective lens 17 through a beam splitter 16.

The objective lens 17 focuses the laser beam on the information record side of the optical disk 12 and also receives the returned light from the reflected beam. If the optical disk 12 is a read-only disk, the optical disk unit 10 can read data recorded on the optical disk according to the change of the luminous energy of the returned light. If the optical disk 12 is a phase-change type optical disk, the optical disk unit can record data by locally changing the crystal structure of the disk at the beam irradiated position and can read recorded data according to the change of the luminous energy of returned light.

If the optical disk 12 is a write-once optical disk, the optical disk unit can record data by locally distorting the disk at the beam irradiated position and can read recorded data according to the change of the luminous energy of returned light. If the optical disk 12 is a magneto-optical disk, the optical disk unit can record data by using thermomagnetic recording wherein a modulating coil 18 arranged near the objective lens 17 is driven by a driving circuit 19 thereby applying a modulating magnetic field to the laser beam irradiated position, and can read recorded data by detecting the change of the plane of polarization of the returned light.

The beam splitter 16 transmits a laser beam incident from the shaping lens 15 to the objective lens 17 and also reflects returned light from the objective lens 17 to another beam splitter 20.

The beam splitter 20 splits the returned light into two outgoing luminous fluxes by transmitting and reflecting the returned light over two paths. The returned light reflected by the beam splitter 20 is directed over one path to lens 21 which converts the returned light to convergent pencil rays. A cylindrical lens 22 applies astigmatism to the returned light incident from lens 21 and a photodetector 23 receives the returned light incident from the cylindrical lens 22.

The photodetector 23 is adapted to generate plural signals in response to the received light: a regenerative signal RF (the signal level of which varies according to the luminous energy of received light), a push-pull signal PP (the signal level of which varies according to the displacement of the laser beam irradiated position for a groove or a pit sequence) and a focus error signal FE (the signal level of which varies according to a defocused quantity by adding/ subtracting processing by a matrix circuit).

The returned light which is passed by the beam splitter 20 over the other path is incident on a half-wave plate 25 which changes the plane of polarization of the returned light to the plane of polarization suitable for splitting the returned light in a polarizing beam splitter 27 (described later). A lens 26 converts the returned light from the half-wave plate 25 to convergent pencil rays. The polarizing beam splitter 27 receives the pencil rays, reflects a predetermined polarizing component and transmits the remaining light and, hereby, splits the returned pencil rays into two luminous fluxes the luminous energy of which complementarily varies according to the plane of polarization.

Photodetectors 28 and 29 respectively receive the two luminous fluxes split by the polarizing beam splitter 27 and respectively output signals whose levels vary according to the received luminous energy. A differential amplifier 30 receives the signals produced by the two photodetectors 28 and 29 and outputs by differential amplification a regenerative signal MO the signal level of which varies according to the plane of polarization of the returned light.

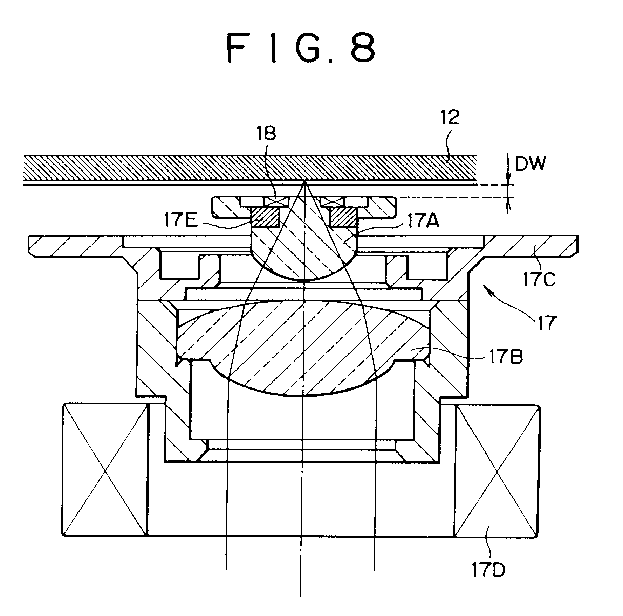

Fig. 8 is a sectional view of the objective lens 17 of the optical head 11. The objective lens 17 is a two-lens system composed of a first lens 17A and a second lens 17B. The first lens 17A and the second lens 17B are both formed as aspherical plastic lenses, are integrally held by a holding member 17C and can be moved vertically and horizontally by a driving actuator 17D to provide tracking control and focus control.

Lens 17B has a relatively large aperture, while lens 17A has a small aperture. The focal length of each lens and the spacing between the lenses are set so that the numerical aperture of the whole objective lens 17 is 0.70. Of course other numerical apertures are within the scope of the present invention including, for example, a numerical aperture of 0.78 which has shown excellent results in practice.

If $\lambda$ denotes the wavelength of the laser beam, NA denotes the numerical aperture of the objective lens 17, t denotes the thickness of the light transmissive layer of the optical disk 12, $\Delta$t denotes the dispersion of t and $\theta$ denotes the skew margin of the optical disk 12, then objective lens 17 is formed so that:

$$\theta \leq \pm\, 84.115 \times (\lambda/NA^3/t) \qquad (2)$$

$$\Delta t \leq \pm\, 5.26 \times \frac{\lambda}{NA^4} \qquad (3)$$

The expression (2) represents the relationship of the skew margin which enables stable access to the optical disk, as described in Japanese published unexamined patent application No. 3-225650. Compact disk systems having skew margins of approximately 0.6 degrees are currently commercially available. By contrast, the skew margin of DVD systems is set to 0.4 degree. In the present invention, even if the thickness of the light transmissive layer of the optical disk 12 is set to 0.1 mm and the numerical aperture NA of the optical system is set to a large value, the optical disk 12 can be accessed practically, sufficiently and stably.

The expression (3) above represents the dispersion of the thickness t of the light transmissive layer which the optical system can tolerate. The constant (5.26) is a value calculated using the standard compact disc as a reference. The thickness of the light transmissive layer t is 100 $\mu$m for a compact disc and 30$\mu$m for DVD. With the present invention, even if the thickness t of the light transmissive layer is dispersive, i.e. varies over a range, the optical disk unit 10 can access the optical disk 12 stably.

When the optical head 11 of the present invention irradiates a laser beam with the wavelength of 650 nm on the optical disk 12 via an optical system with the numerical aperture of 0.78, the following relational expression is met:

$$8 \approx 4.7 \times \left[ \frac{0.65}{0.60} \times \frac{NA}{\lambda} \right] \quad GB \quad (4)$$

In the above expression, the numeral 4.7 denotes the recording capacity (GB) of DVD and the numerals 0.65 and 0.60 respectively denote the wavelength of the laser beam in DVD and the numerical aperture of the DVD optical system. With the present invention, the optical head 11 can process data according to the same format as DVD and can provide a recording capacity of approximately 8 GB.

In the objective lens 17 formed as described above, the first lens 17A protrudes toward the side of the optical disk 12 resulting in a working distance DW as determined by the numerical aperture. In this embodiment, the working distance DW is set to approximately 560μm by selecting the characteristics and the arrangement of the lenses 17A and 17B. With the present invention, the allowable degree of decentering between the lens surfaces, the allowable degree of facial angle and the curvature of the objective lens 17 of the optical head 11 can be set in a range which enables mass production manufacturing. It will be appreciated that the overall size of the optical system can be miniaturized and, as a result, collision with the optical disk can be readily avoided.

In the optical head, because the laser beam with the same beam diameter as the numerical aperture is irradiated upon the optical disk if the numerical aperture is increased, the objective lens should be arranged close to the information record side of the optical disk, To maintain a sufficient distance between the optical disk and the objective lens, the beam diameter of the laser beam should be increased. The beam diameter of the laser beam is approximately . 45μm, which is approximately equal to the case of DVD as a practical upper limit value.

If the optical head is close to the optical disk, the beam diameter of the laser beam is reduced and the size of the optical system is miniaturized. As a result, manufacturing precision and the precision of the arrangement of the objective lens must be enhanced and further, the optical head may collide with the optical disk. Therefore, in this embodiment, the working distance DW is set to approximately 560μm so as to meet these conditions.

The surface of the first lens 17A facing the optical disk 12 is flat. With the present invention, there is more secure focus control. Even if the surface of the optical disk 12 is skewed, the lens 17A will not collide with the surface of the disk.

The diameter of the lens 17A is reduced stepwise as shown in Fig. 8 and the objective lens 17 is formed so that the surface facing the optical disk 12 has a diameter sufficient to direct the laser beam to the optical disk 12.

The modulating coil 18 is arranged so that it surrounds the end of the first lens 17A. The side of the modulating coil closest to the optical disk 12 is approximately flush with the surface of the first lens 17A. The modulating coil 18 is arranged as close to the optical disk 12 as possible so that the modulating coil does not protrude from the surface of the lens 17A and so that the modulating magnetic field can be efficiently applied to the irradiating position of the laser beam.

The rise in temperature of the modulating coil 18 is reduced by a heat sink 17E. The heat sink surrounds the first lens 17A so that changes due to a rise of temperature, of various characteristics can be limited to a manageable range.

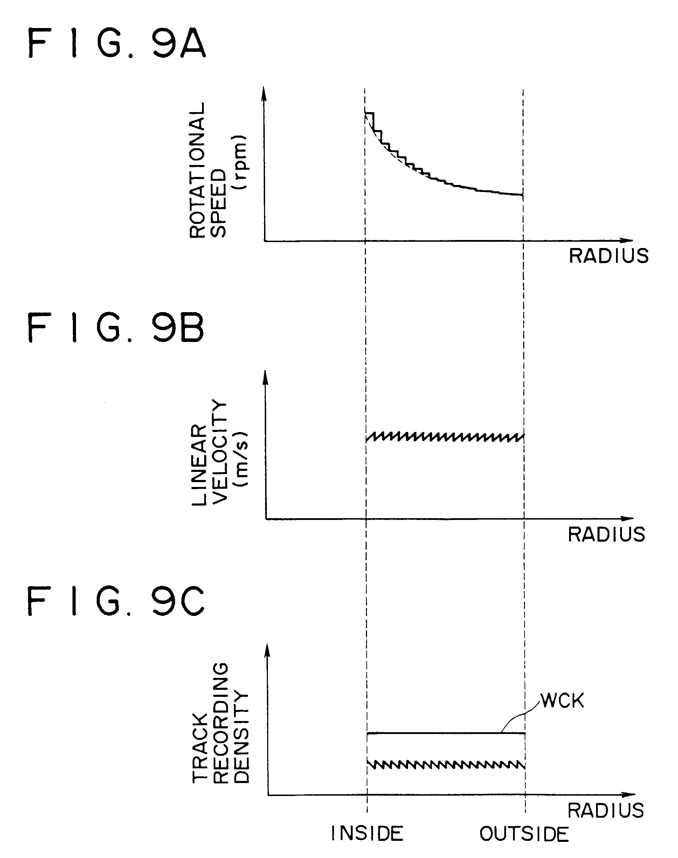

In the optical disk unit 10 shown in Fig. 6, a spindle motor 33 rotates the optical disk 12 under the control of a system control circuit 34. The optical disk 12 is driven at a zone constant linear velocity (ZCLV), which is shown graphically in Fig. 9. In the normal operation mode, a read/write clock R/W CK generated by a PLL circuit 35 has a fixed frequency. Zoning by ZCLV is similar to the zoning described in relation to Fig. 3.

The spindle motor 33 switches the rotational speed of the optical disk 12 in a stepwise manner as the laser beam irradiated position shifts in the radial direction as shown in Fig. 9A. Thus, in the optical disk unit 10, the linear velocity and track recording density are prevented from varying greatly from the inner diameter to the outer diameter of the disk, as shown in Figs. 9B and 9C.

In a special operation mode (such as after recording), the spindle motor 33 rotates the optical disk 12 at a predetermined rotating speed under control of the system control circuit 34.

A thread motor 36 moves the optical head 11 in the radial direction of the optical disk 12 under the control of the system control circuit 34 to carry out a seek operation for seeking tracks on the disk.

An address detecting circuit 37 receives the regenerative signal RF (the signal level of which varies according to the luminous energy of light reflected back to the optical head 11) and digitizes the regenerative signal RF. Address data ID is detected using a synchronizing signal derived from the binary signal. The detected address data ID is located in a sector header and output to the system control circuit 34 and a cluster counter 38, with the latter operable to supply the system control circuit with detected timing. The system control circuit 34 specifies a laser beam irradiated position on disk 12 based upon the address data ID; the cluster counter 38 checks the timing of a sector.

The address detecting circuit 37 is adapted to detect an error based upon an error-detecting code included within the address data ID such that a correct address data ID is selectively output.

A wobble signal detecting circuit 39 includes a bandpass filter 39A to extract a wobble signal WB from a push-pull signal PP output from the optical head 11. A comparing circuit 39B digitizes the wobble signal WB based upon a zero level to extract edge information from the wobble signal.

A wobbling cycle detecting circuit 40 receives the digital signal S1 from the wobble signal detecting circuit 39 and determines whether the wobble signal varies at the correct cycle by sensing the timing of the corresponding edge based upon the timing of each edge in the signal S1. The wobbling cycle detecting circuit selectively outputs correct edge information to the PLL circuit 35. The wobbling cycle detecting circuit 40 prevents a clock CK from being displaced by dust (which adheres to the optical disk 12) or other factors.

The PLL circuit 35 includes a phase comparing circuit (PC) 35A to compare the phase of the digital signal from the wobbling cycle detecting circuit 40 with a clock CK output from a frequency divider 35B. The frequency divider 35B has a ratio of dividing which is set by the system control circuit 34 to divide a timing signal and output a predetermined clock CK. The low-frequency component of the phase comparison output from the phase comparing circuit 35A is extracted by a lowpass filter (LPF) 35C to control the oscillation frequency of a voltage controlled oscillator (VCO) 36D. The output of the voltage controlled oscillator is supplied as the timing signal to be divided by the frequency divider 35B which generates a high-precision clock CK.

The dividing ratio of the frequency divider 35B is set corresponding to zoning explained in relation to Fig. 3 so that the ratio of dividing is increased as the laser beam irradiated position is displaced radially outward on the optical disk 12. Hence, the frequency of the output of the voltage controlled oscillator 35D is increased stepwise with the frequency of the wobble signal WB as the laser beam position is moved outward, and this output is used as the read/write clock R/W CK.

In a normal operation mode of the optical disk unit 10, track recording density is prevented from being changed greatly between the inner disk diameter and the outer disk diameter by rotating the optical disk 12 so that the read/write clock R/W CK frequency is fixed frequency. As a result, the overall recording density of the disk is increased.

The cluster counter 38 identifies the laser beam irradiated position by counting the read/write clock R/W CK based upon the address detected by the address detecting circuit 37. The cluster counter outputs a cluster start pulse to the system control circuit 34 based upon the cluster count. A cluster is defined as a unit in which data is recorded on or read from the optical disk and a cluster start pulse is defined as a pulse which specifies the timing of the start of the cluster.

If the start of a sector is not detected by the address detecting circuit 37 due to dust or other errors, the cluster counter 38 interpolates a cluster start pulse as a function of the count of the read/write clock R/W CK.

The system control circuit 34 includes a computer, such as a microprocessor, for controlling the operations of the optical disk unit 10 and the operation of the thread motor 36, all under the control of an external device. The system control circuit 34 switches the ratio of dividing of the frequency divider 35B in response to dividing ratio data stored in memory 42 and addressed by address data ID corresponding to the laser beam irradiated position. The system control circuit reduces the rotational speed of the optical disk sequentially in a stepwise manner from the inner diameter toward a zone in the outer diameter, corresponding to the zones Z0, Z1, ---, Zn-1, Zn described above in relation to Fig. 3, in the normal operation mode. Thus, the recording density of each sector in a zone in the inner diameter and in a zone in the outer diameter to an equal value.

In a special operation mode (such as after recording), if the recording/reading processing of two channels of user data DU1 and DU2 alternately records on and reads from the optical disk 12 and outputs the user data simultaneously in parallel, the system control circuit 34 controls the operation of a spindle servo circuit so that, even if a zone is switched to read the user data DU1, the rotational speed of the optical disk 12 is not switched. The system control circuit reads user data DU at the rotational speed of the optical disk when last recorded even if the zone is switched in reading while recording/reading processing is alternately repeated. If two channels of user data DU1 and DU2 are alternately read from the optical disk and output simultaneously in parallel, the user data DU1 is read from the optical disk in a state in which the optical disk DU2 is rotated at the rotational speed used to read the other user data DU2. In this case, the system control circuit 34 rotates the optical disk 12 at twice the normal rotational speed for that zone and records or reads the user data by applying the technique of ZCLV to the channel being recorded as well as to the channel being read.

If the rotational speed of the optical disk is switched, a settling time is required. If the time required to switch the rotational speed of the optical disk 12 is ignored and a particularly short latency time is required to lock the PLL circuit, as compared with physically switching the rotational speed, the operation of recording or reading is switched. The system control circuit 34 sets the rotational speed of the optical disk to approximately twice the normal rotational speed for a particular zone under the control of ZCLV. As a result, the system control circuit intermittently records/reads two channels of user data DU on the optical disk at high speed with sufficient time for seek and other functions and for processing other channels.

Fig, 10 is a flowchart showing the processing for setting the rotational speed of an optical disk in the system control circuit 34. When a user selects an operation mode, the system control circuit 34 shifts control from step SP1 to step SP2, and determines whether the operation mode selected by the user is one of the aforementioned operation modes (such as after recording). If a negative result is acquired (where the operation mode is not recognized), control is shifted to step SP3 where the system control circuit 34 sets the operation mode of the spindle servo circuit to an operation mode at ZCLV. The system control circuit shifts control to step SP4 and terminates the routine.

If the affirmative result is acquired in step SP2 (the operation mode selected by the user is recognized), the system control circuit 34 shifts control to step SP5. In step SP5, the system control circuit 34 inhibits the switching of the rotational speed (that is, sets the operation mode to CAV) in a channel for reading in the case, for example, two channels are recorded or read. Next, the system control circuit 34 shifts control to a step SP6 and, after the system control circuit sets the operation mode at ZCLV at the above rotational speed, for the proper zone channels, control is returned to the step SP4 and the procedure is terminated.

The system control circuit 34 allocates one cluster of data to four consecutive sectors (as indicated by an address area AR2 in each sector) by controlling the reading/writing according to a cluster start pulse output from the cluster counter 38. The system control circuit sequentially increases the number of clusters allocated to each zone on a zone-by-zone basis from the inner diameter of the disk to the outer diameter.

The system control circuit controls a tracking servo circuit (not shown) to switch the moving direction of the objective lens 17 as a function of the polarity of a tracking error signal to control the scanning by the laser beam of a groove and a land.

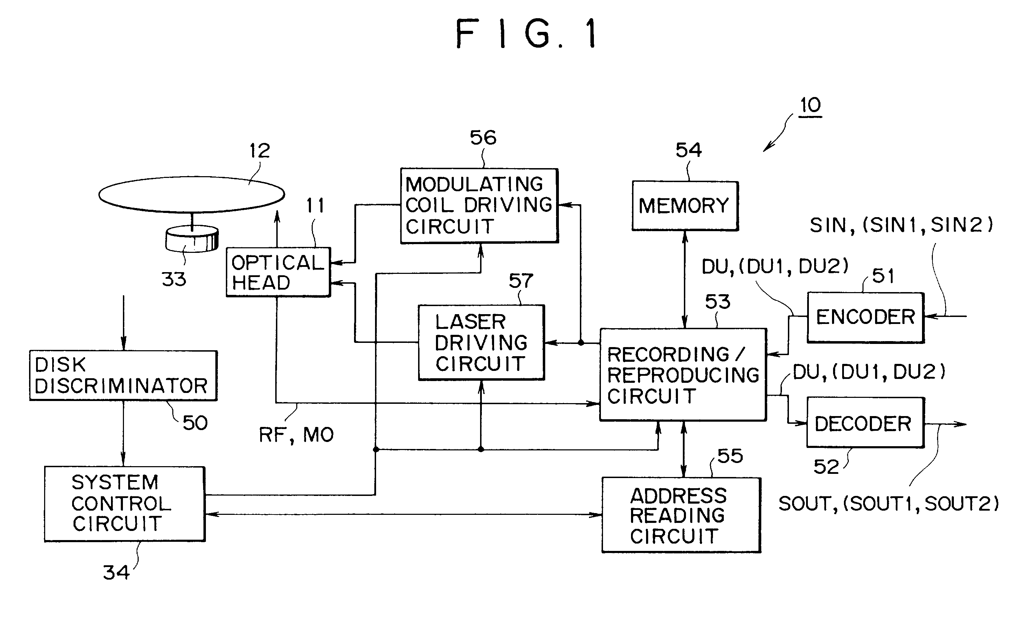

Returning to Fig. 1, this is a block diagram showing the recording/reading system of the optical disk unit 10. A disk discriminator 50 discriminates the type of the optical disk 12 by sensing identifying indicia, such as a concave portion formed in the disk cartridge (to be described), and outputs an identification signal to the system control circuit 34. The optical disk unit switches the operation of the recording/reading system according to the type of optical disk loaded thereinto so that various optical disks can be accessed and processed.

An encoder 51 compresses data to be recorded according to, for example, an MPEG format defined by the Moving Picture Experts Group (MPEG) when an input signal SIN (which is assumed herein to be a video signal and an audio signal) is input from an external device (resulting from recording, editing or other applications), the input signal being converted from analog to digital form. The encoder packetizes the compressed video and audio signals and adds a packet header, control data and other information to each packet. The compressed video and audio signals are multiplexed by time division multiplexing and sequentially outputs these packets as user data (DU) composed of a time division multiplexed bit stream. The encoder is adapted to process two channels of video and audio signals simultaneously in parallel and to output two channels of user data DU1 and DU2 corresponding to these two channels under the control of the system control circuit 34.

A decoder 52 is adapted to expand the user data DU output from a recording/reading circuit 53 during reading and editing operations according to the MPEG format. The decoder recovers digital video and audio signals, and converts the digital signals to analog signals SOUT for output. The decoder decodes the two channels of video and audio signals SOUT1 and SOUT2 simultaneously in parallel (similar to the encoder 51), under the control of the system control circuit 34.

The recording/reproducing circuit 53 stores in memory 54 user data DU output from the encoder 51 for recording or editing. The user data is processed in units of predetermined blocks and recorded on the optical disk 12.

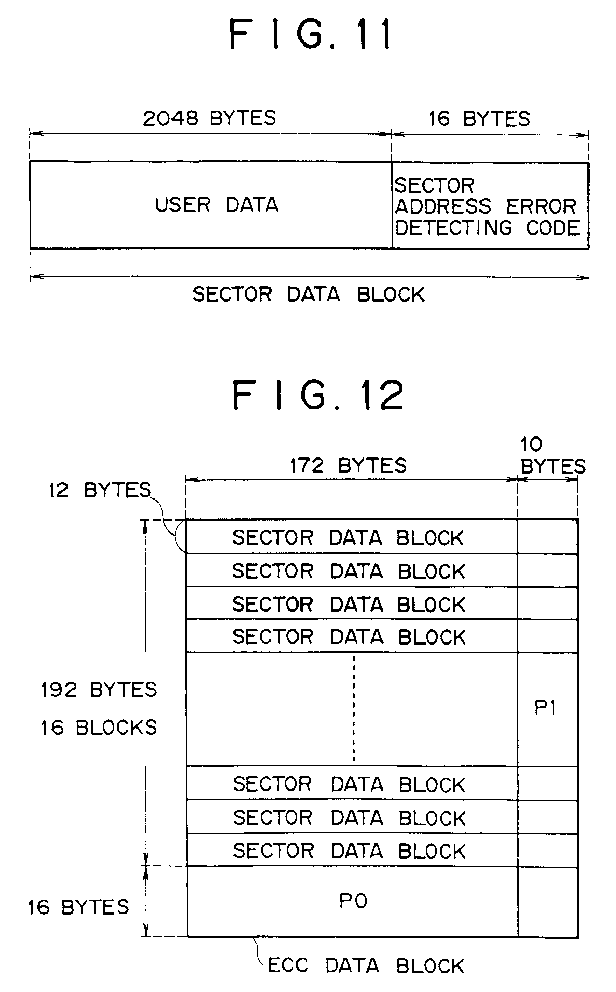

As shown in Fig. 11, the recording/reproducing circuit 53 sequentially blocks user data DU into units of 2048 bytes and adds address data and an address error-detecting code composed of 16 bytes to each block. The recording/reading circuit 53 thus forms a sector data block of 2064 bytes (2048 bytes + 16 bytes). The address data is the address of the sector data block. It will be appreciated that a sector of user data DU is different from a disk sector as described above in conjunction with Fig. 3.

As shown in Fig. 12, the recording/reading circuit 53 forms an ECC data block (182 bytes x 208 bytes) of 16 data block sectors. That is, the recording/reading circuit arrays 16 data block sectors composed of 2048 bytes + 16 bytes (Fig. 12) in units of 172 bytes in a raster scan order, generates an error-correcting code (PI) (which is a lateral internal code) and generates an error-correcting code (PO) (which is a longitudinal external code).

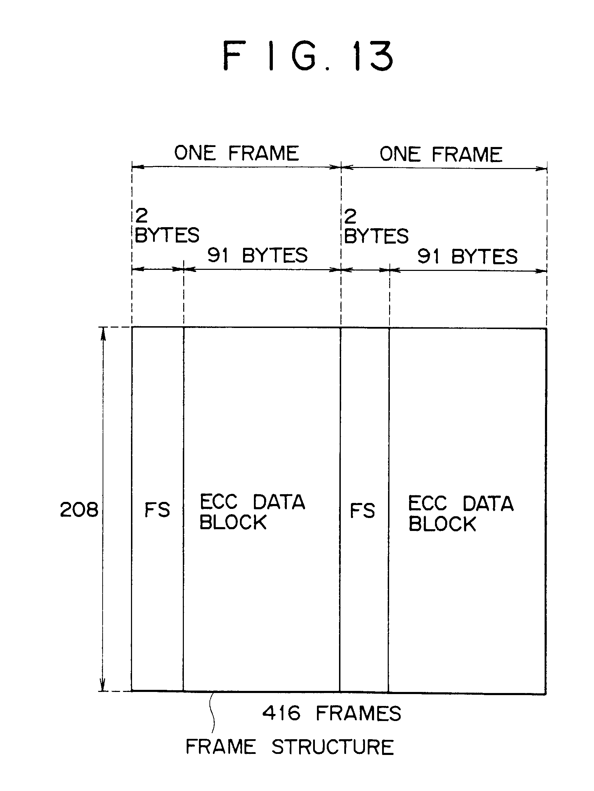

The recording/reproducing circuit 53 interleaves the ECC block to form the frame structure shown in Fig. 13. Two bytes of a frame synchronizing signal (FS) are added to each 91 bytes of the ECC data block (182 bytes x 208 bytes) to form 416 frames in one ECC data block. One cluster of data is formed from the frame structure shown in Fig. 13 and this one cluster is recorded in four consecutive sectors.

The recording/reproducing circuit 53 assigns data with a predetermined fixed value if necessary and processes consecutive data according to the sector structure described in Figs. 4A-4C2. After the recording/reproducing circuit modulates a raw of data in this array, it processes consecutive bits for output and intermittently outputs the data at the faster data transfer rate of 11.08 Mbps as compared to the data rate of the user data DU input from the encoder 51 in a normal operation mode as determined by the read/write clock R/W CK. Hence, the recording/reproducing circuit 53 can track the optical head 11 during the spare time between the intermittent recording of user data DU and, thus, can record consecutive user data discretely.

In the special operation mode (such as after recording), the recording/reproducing circuit outputs data modulated at the data transfer rate of approximately 20 Mbps and can record two channels of user data DU1 and DU2 alternately. The optical disk unit 10 thus can operate to read data recorded on the optical disk 12, edit/record the read data and repeat the recording/reading in units of clusters.

When data is recorded, the recording/reproducing circuit 53 outputs data modulated according to the read/write clock R/W CK described in Fig. 6 and starts the output of data modulated according to the timing detected by the cluster counter 38 under the control of the system control circuit 34. The recording/reproducing circuit amplifies the regenerative signals RF and MO generated by the optical head 11 during reading, digitizes the signals (RF, MO) and generates binary signals therefrom. A clock corresponding to the read/write clock R/W CK is regenerated based upon the regenerative binary signals RF and MO. The recording/reproducing circuit detects read data by sequentially latching binary signals according to the regenerated clock.

The recording/reproducing circuit 53 decodes the read data and generates decoded data by using the partial response maximum likelihood (PRML) technique. After the recording/reproducing circuit 53 interleaves the decoded data, it corrects errors therein and outputs the result to the decoder 52.

In DVD, modulated data is recorded in the shortest pit length of 0.4μm and if a recording/reproducing system is constituted with the same margin as DVD in terms of a numerical aperture, desired data can be recorded and read in the shortest pit length of 0.3μm and at the track recording density of 0.23 μm/bit.

The recording/reproducing circuit intermittently reads data from the optical disk 12 in units of clusters at the data transfer rate of 11.08 Mbps in a normal operation mode (as in recording) and continuously outputs the read user data DU to the decoder 52 via the memory 54. In a special operation mode (such as after recording), data is intermittently read from the optical disk 12 in units of clusters at the data transfer rate of approximately 20 Mbps corresponding to the rotational speed of the optical disk and the read user data DU is continuously output to the decoder 52 via the memory 54.

During reading, if the optical disk is a magneto-optical disk, the recording/reproducing circuit 53 selectively processes a regenerative signal MO (the signal level of which varies according to the plane of polarization) under the control by the system control circuit 34 to read user data DU. If the optical disk 12 is a read-only optical disk, a write-once optical disk or a phase-change type optical disk, the recording/reproducing circuit selectively processes a regenerative signal RF (the signal level of which varies according to the change of the luminous energy of returned light) to read user data DU. If a read in area on the inner diameter of the disk is read, the recording/reproducing circuit selectively processes a regenerative signal RF and reads user data DU.

An address reading circuit 55 generates address data added to each sector data block shown in Fig. 1 during recording, outputs it to the recording/reproducing circuit 53, analyzes address data detected by the recording/reproducing circuit 53 during reading and informs the system control circuit 34.

The memory 54, which may be a large capacity buffer memory for temporarily storing and holding user data, sequentially and cyclically switches a memory area under address control by a writing pointer and a reading pointer in a memory control circuit (not shown), continuously inputs/outputs user data DU between the encoder 51 and the decoder 52 and intermittently inputs/outputs user data DU in units of clusters between the memory and the optical disk via the recording/reproducing circuit 53.

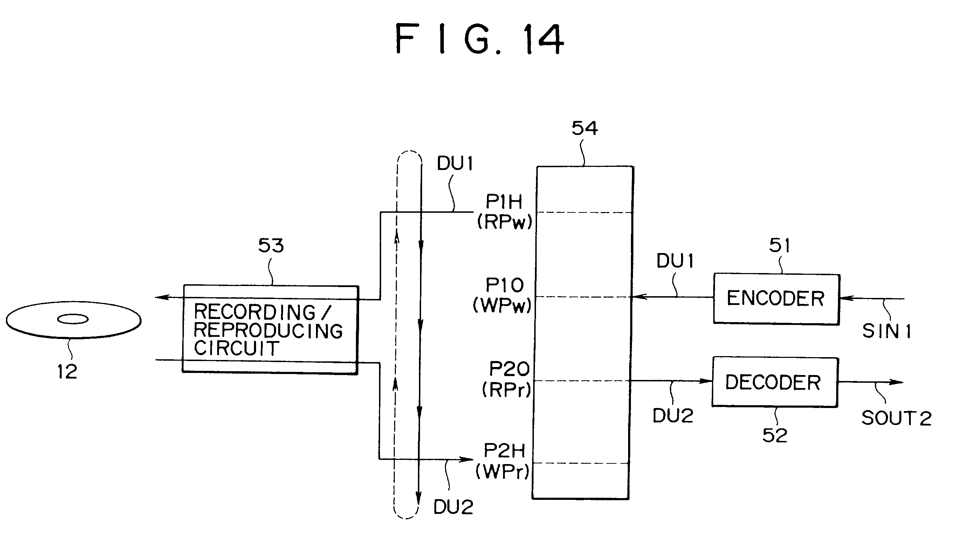

If the memory 54 processes two channels of user data DU1 and DU2 simultaneously in parallel in a special operation mode (such as after recording), pointers P1H and P2H serve to input data to and output data from the optical disk 12; and pointers P1O and P20 serve to input data from and output data to both the encoder 51 and the decoder 52, respectively, as shown in Fig. 14. The memory continuously inputs/outputs these two channels of user data DU1 and DU2 simultaneously in parallel to/from the encoder 51 and the decoder 52 under address control by these pointers and alternately inputs user data DU1 and DU2 to and outputs this user data from the optical disk 12 in units of clusters.

Fig. 14 shows the setting of a pointer for after recording. The pointers P1H and P2H for input to and output from the optical disk 12 respectively point to pointers RPw and WPr for reading from and writing to the optical disk and the pointers P1O and P2O for input from and output to both the encoder 51 and the decoder 52 respectively point to a pointer WPw for input from the encoder 51 and a pointer RPr for output to the decoder 52.

If the capacity of the memory 54 is set to approximately 10 Mbits, two channels of user data can be alternately recorded on or read from the optical disk at the data transfer rate of 8 Mbps to the encoder 51 and the decoder 52 with a seek time of approximately 200 ms and at an interval of approximately two seconds.

A laser driving circuit 57 drives a semiconductor laser of the optical head 11 at a timing synchronized with the read/write clock R/W CK under the control of the system control circuit 34. During writing the laser driving circuit intermittently increases the luminous energy of the laser beam, assuming the optical disk is a magneto-optical disk, or a phase-change type or write-once optical disk. The optical disk unit 10 forms a pit sequence in the shortest recording pit of 4/3 bit with a maximum run length of 2T and a minimum run length of T and records user data at the track recording density of 0.21 μm/bit in the shortest pit length of 0.3 μm or less. During reading, the laser driving circuit 57 maintains the luminous energy of the laser beam at a fixed low level.

A modulating coil driving circuit 56 operates during recording under the control of the system control circuit 34 and drives the modulating coil of the optical head 11 according to the output data from the recording/reproducing circuit 53, assuming the optical disk is a magneto-optical disk. Thus, a modulating magnetic field is applied to the position at which the laser beam (the luminous energy of which is intermittently increased) irradiates the disk to form a pit with the shortest recording pit of 4/3 bit with a maximum run length of 2T and a minimum run length of T. If thermomagnetic recording is used, user data is recorded with the track recording density of 0.21 µm/bit with the shortest pit length of 0.3 µm or less.

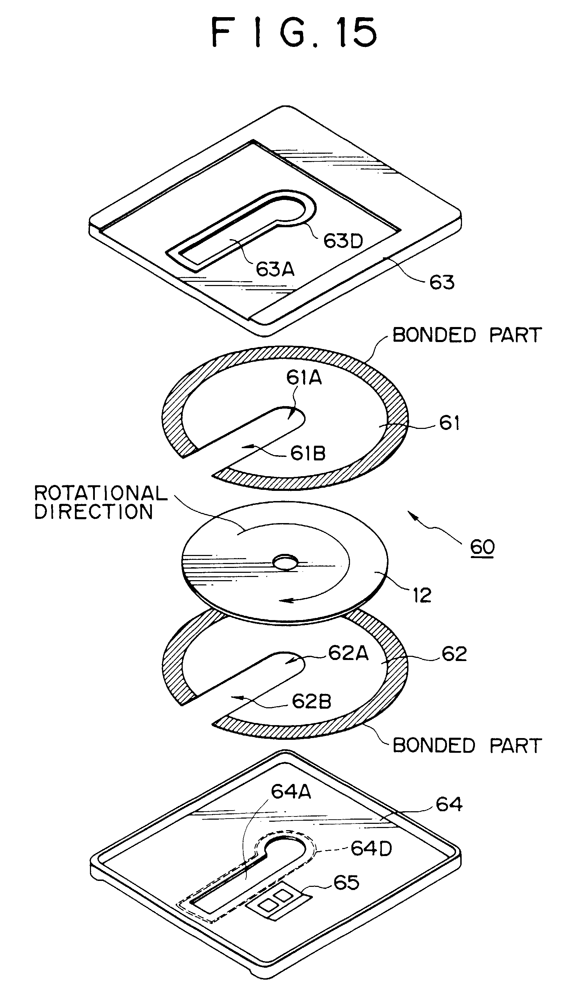

Fig. 15 is an exploded perspective view of a cartridge 60 for housing the optical disk 12. In this embodiment, the optical disk 12 is housed and held in the cartridge 60 so that the optical disk cannot be extracted when loaded onto the optical disk unit 10. In Fig. 15, the shutter (described below) is detached from the cartridge.

Sheet members 61 and 62 are arranged on both sides of the optical disk 12 and housed between the upper case 63 and the lower case 64. The sheet members 61 and 62 are formed by punching nonwoven fabric in an approximately disclike shape; the nonwoven fabric is made up of fibers on the surface, formed with minute irregularities. When the optical disk 12 is rotated, dust and other aberrations on the surface of the disk are collected on the sheet members and, as a result, both sides of the optical disk are cleaned by the sheet members 61 and 62.

The sheet members are larger in diameter than the optical disk. The periphery shown by the hatching in Fig. 15 is bonded by an adhesive so that the periphery of the adhered sheet members surrounds the periphery of the optical disk 12. The sheet members thus form a bag for housing the optical disk 12 therein and to protect the optical disk so that dust and other particles which invade the cartridge 60 do not adhere to the optical disk.

Radial cutouts are formed in the sheet members to extend from the vicinity of the rotational center of disk 12 to the peripheral side. Cutouts 61B and 62B thus permit access to the optical disk when cartridge 60 is loaded into the optical disk unit 10. Openings 61A and 62A in the sheet member permit a drive spindle to pass therethrough and rotatable drive disk 12.

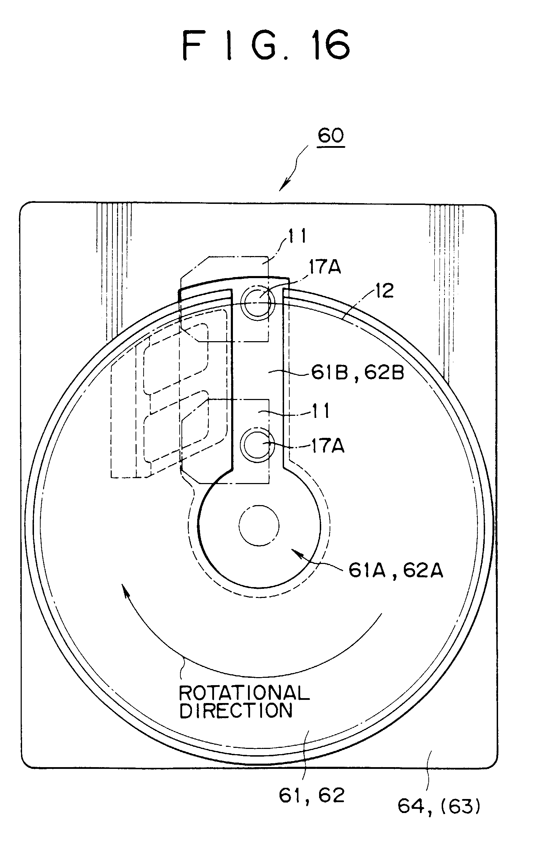

It will be appreciated from Fig. 16 that the cutouts 61B and 62B are formed in a shape in which the first lens 17A of the optical head 11 and components such as the modulating coil 18 do not contact the sheet members 61, 62 or the disk 12 even when the optical head 11 is in a seek mode. The laser beam passes through a cutout to impinge disk 12 at the laser beam irradiated position.

If the information record side of the optical disk is formed on only a single side, only one cutout need be formed in either sheet member 61 or sheet member 62.

The upper case 63 and the lower case 64 are formed of injection molded resin and openings 63A and 64A are collateral with cutouts 61B and 62B and extend radially from the vicinity of the rotational center of the cartridge. Openings 63D and 64D in upper case 63 and lower case 64D permit a drive spindle to pass therethrough and rotatably drive disk 12.

Openings 63A, 64A are wider than the cutouts 61B and 62B of the sheet members 61 and 62. If the optical disk 12 is provided with only one information record side, only one opening 63A or 64A need be formed in either the upper case 63 or the lower case 64.

The lower case 64 includes a pressing member 65 arranged in the vicinity of the opening 64A to press the sheet member 62 on the optical disk 12. The pressing member 65 is formed by bending a metallic plate in the shape of a spring to improve the cleaning effect by the sheet members 61 and 62. Preferably, the pressing member presses the sheet member against the information record side of the disk 12.

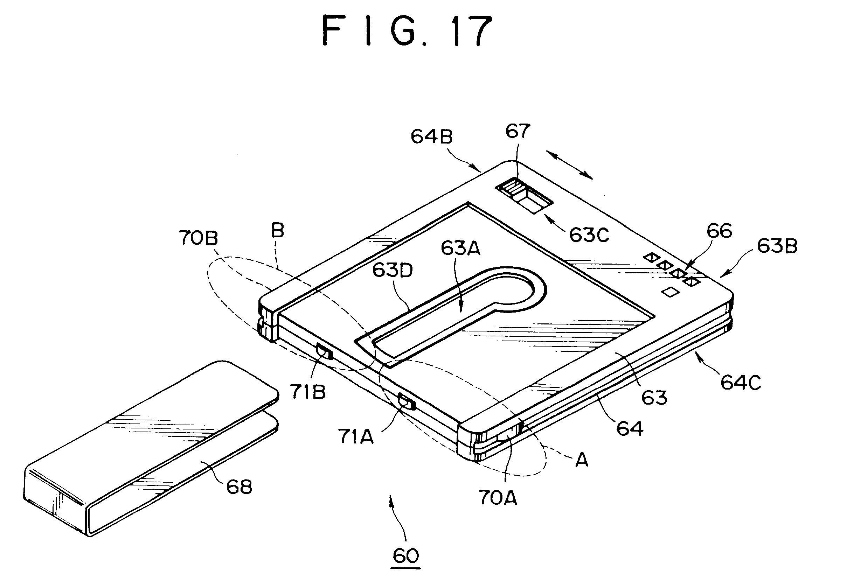

As shown in Fig. 17, corners 63B and 64B in the upper case 63 and the lower case 64, respectively, on opposite sides to the openings 63A and 64A function as identification by including rectangular concave portions, or depressions (holes) 66 which identify the optical disk 12 held inside. Hence, the type of optical disk can be readily and positively identified. If the optical disk housed inside the cartridge is a so-called double-sided disk provided with information recorded on both sides, the identification areas 63B and 64B are respectively formed in the upper case 63 and the lower case 64; whereas if the optical disk is provided with only one information record side, the identification area 63B or 64B is formed in either the upper case 63 or the lower case 64. For example, if the lower side of disk 12 is the information record side, the identification area may be provided on lower case 64. Of course, any arrangement of identification areas may be employed so long as the system of identification is understood.

In the upper case 63 and/or the lower case 64, there is provided a slide switch 67 which can be slid as shown by the arrows to open and close a through hole in the areas 63C and 64C. This switch functions to write protect the cartridge 60; and write protection can be set on each side of the optical disk 12 by operating the slide switch 67. If the optical disk 12 is provided only one information record side, only a single slide switch need be formed on either the upper case 63 or the lower case 64.

A c-shaped shutter 68 formed by bending a metallic plate or by injection molding resin is arranged so that it covers the openings 63A and 64A of the upper case 63 and the lower case 64 and slides open by the loading mechanism of the optical disk unit 10 to expose the optical disk beneath openings 63A and 64A when the cartridge is loaded into the disk unit.

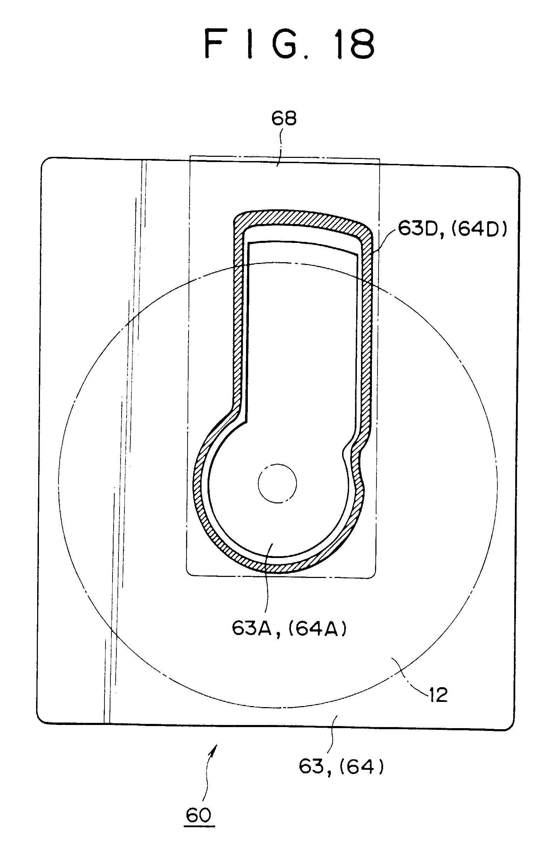

Buffer members 63D and 64D (only 63D is shown) are arranged in the upper case 63 and the lower case 64 to surround the openings 63A. and 64A. The buffer members 63D and 64D are formed of elastic sheet material as shown in Fig. 18, such as by punching a felt sheet in a shape which surrounds the openings 63A and 64A. The buffer members may be glued to the upper case 63 and the lower case 64 and function to seal any clearance to prevent dust and other particles from invading between the shutter 68 and the upper case 63 or between the shutter 68 and the lower case 64 when the openings 63A and 64A are covered by the shutter.

A limiting mechanism is provided in the upper and lower cases 63,64 for limiting the slide of the shutter 68. As shown in Fig. 17, buttons 71A and 71B are arranged on both sides of the shutter 68; and buttons 70A and 70B are arranged on both sides of the cartridge to prevent the limiting mechanism from being forced out of respective grooves formed on both sides of the cartridge 60.

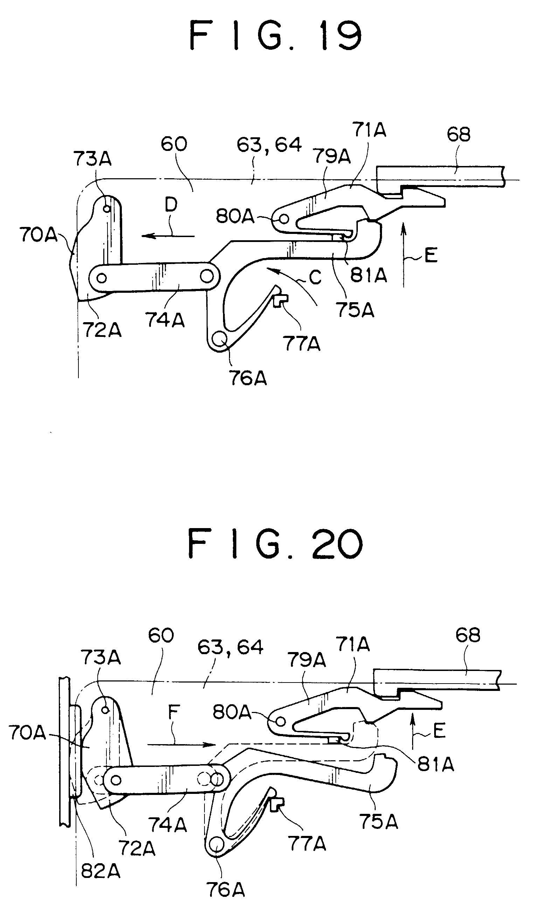

Fig. 19 is a plan view of one limiting mechanism identified as "A" in Fig. 17. Button 70A extends from a turning member 72A and protrudes from the side of the cartridge. The turning member 72A is formed by injection molding resin and is held to pivot around a turning shaft 73A arranged at the corner of the cartridge 60. The bottom portion of turning member 72A is connected to a first stopper 75A via a coupling member 74A.

The first stopper 75A is formed of injection molded elastic resin and supported to pivot about a turning shaft 76A. Two arms of the first stopper 75A extend from the vicinity of the turning shaft 76A, with one arm caught by a projection 77A formed in the upper case 63 (or the lower case 64) and is biased to rotate in the direction of arrow C. The other arm of the first stopper 75A presses against turning member 72A via the coupling member 74A in the direction of arrow D so that the button 70A protrudes from a window of the cartridge 60 and thereby limits rotation of the first stopper 75A.

One arm of the first stopper 75A is bent approximately perpendicular to the connection with the coupling member 74A and extends approximately in parallel with the side of the cartridge. The end of this arm is bent toward the shutter in the vicinity of the end of the shutter 68 and contacts a second stopper 79A to regulate the motion of the latter. The second stopper 79A is formed by injection molding (similar to the first stopper 75A) and is supported to pivot about a turning shaft 80A. Two arms of the second stopper 79A extend from the vicinity of the turning shaft 80A and the button 71A is formed on one of those arms. The end of the other arm of the second stopper 79A is caught by a projection 81A which is formed on the back of the arm of the first stopper 75A. As a result of the elasticity of the arm caught by the projection 81A, the force exerted on the second stopper 79A is in the direction of arrow E.

The end of the arm of the second stopper 79A near button 71A extends to the bottom of the shutter E8 to engage the projection of the shutter. The first and second stoppers are formed so that the end of the arm of the first stopper 75A engages the back of the arm of the second stopper while the end of the arm of the second stopper engages the projection of the shutter 68.

Movement of the second stopper 79A is regulated by the first stopper 75A to prevent releasing the engagement of the second stopper with the shutter 68 even if button 71A is displaced inside the cartridge 60. Hence, the access opening in the cartridge is not exposed by the sliding of the shutter 68 in the event of misoperation by a user, and the invasion of dust and other particles is effectively avoided.

As shown in Fig. 20, when a pressing member 82A pushes button 70A, first stopper 75A is driven via the coupling member 74A as shown by the arrow F so as to pivot about shaft 73A, and the end of the arm of the first stopper 75A recedes from the back of the second stopper 79A. However, the button 71A arranged on the second stopper 79A is held in a displaceable state.

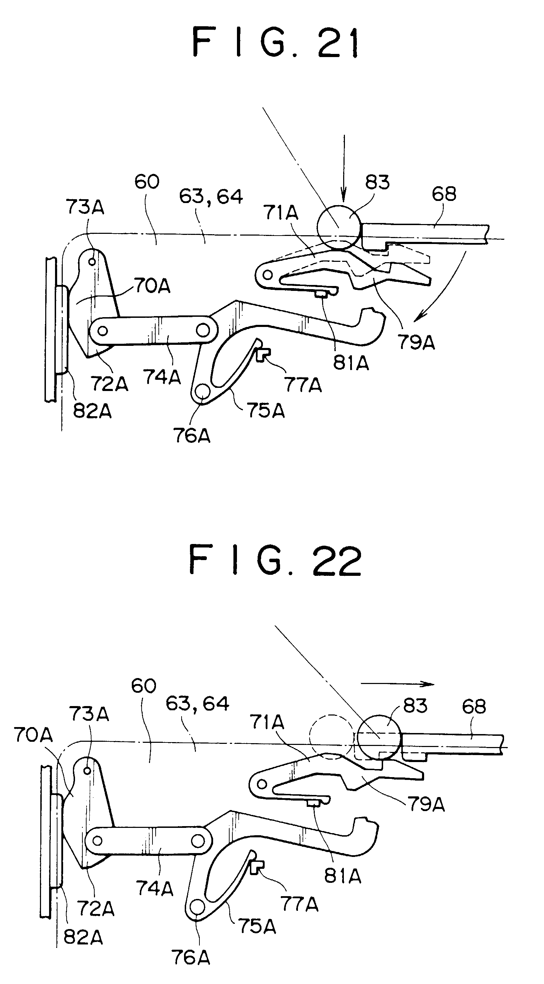

As shown in Fig. 21, engagement between the shutter 68 and the second stopper 79A is released by pressing the button 71A on the second stopper 79A. As shown in Fig. 22, the shutter 68 now can be moved without being restrained by the other limiting mechanism.

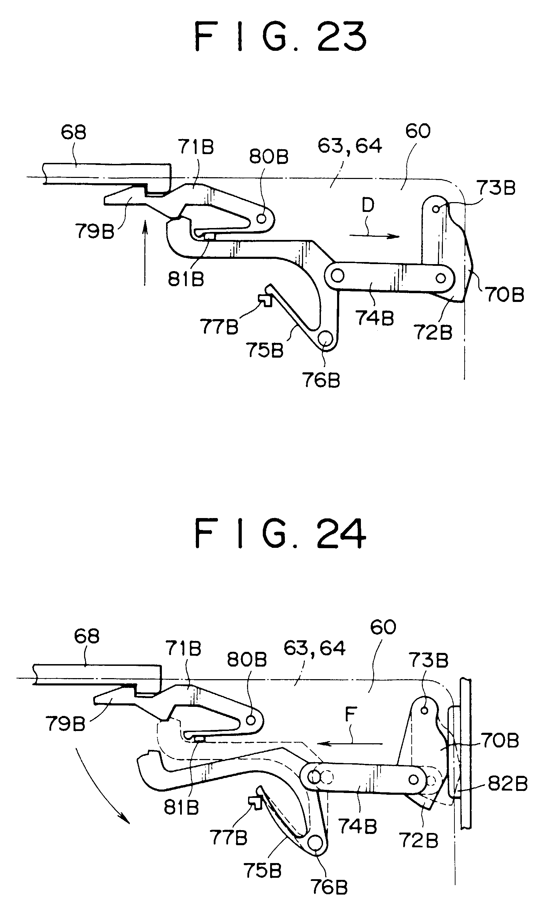

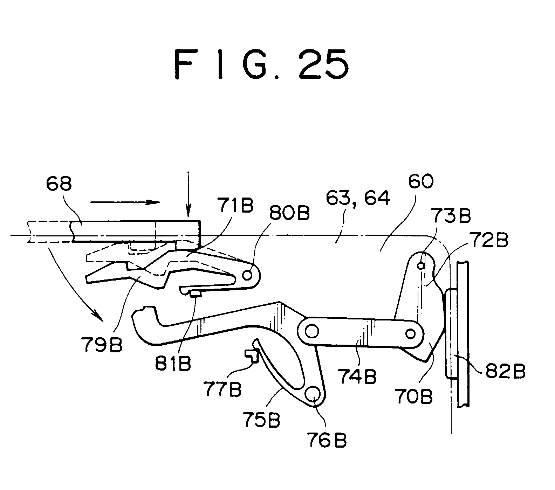

Figs. 23 to 25 are plan views showing the other limiting mechanism which is formed symmetrically to the one described in conjunction with Figs. 19 to 22. Thus, if a double-sided disk is housed in tile cartridge 60, the disk may be loaded in the optical disk unit 10 no matter which surface of cartridge 60 faces up, and the shutter nevertheless will be released. Hence, a single-sided disk or a double-sided disk having a common loading mechanism may be used.

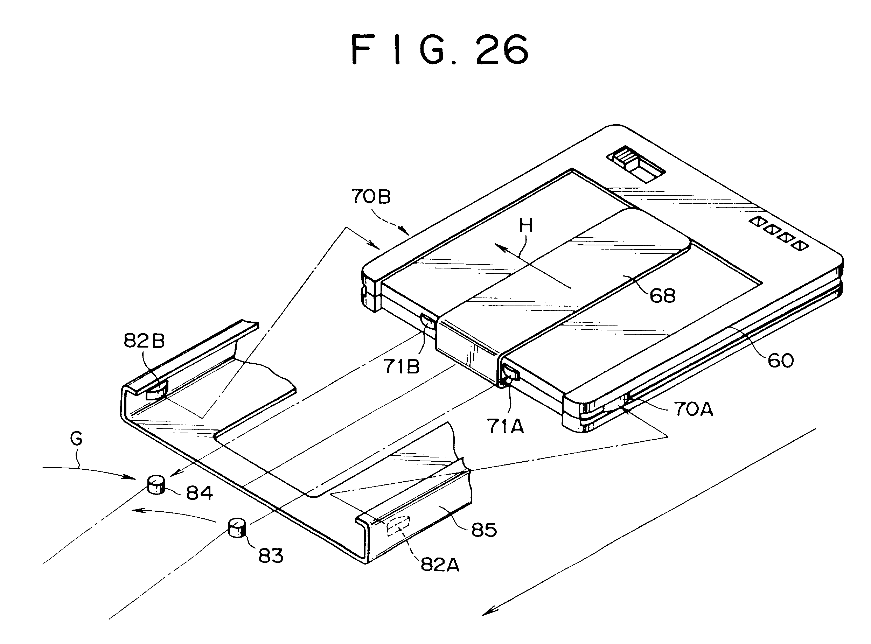

Fig. 26 is a perspective view showing the relationship between the limiting mechanism and the loading mechanism of the optical disk unit 10. The optical disk 12 is loaded into disk unit 10 by pulling the cartridge 60 into a predetermined tray 85. Projections 82A and 823 (which are pressing members) are arranged on the inner side of the tray 85, and, when the cartridge 60 is slid to a predetermined position on the tray 85, the projections 82A and 82B respectively press the buttons 70A and 70B.

Two rollers 83 and 84 in the optical disk unit 10 are arranged in the inner part of the tray 85. The two rollers 83 and 84 are attached to the end of an arm supported by a predetermined pivot shaft. When the cartridge 60 is slid to a predetermined position, roller 83 contacts both the button 71A and the end of the shutter 68; and roller 84 contacts button 71B and the shutter 68 in a state in which the buttons 70A and 70B are pressed.

When the cartridge 60 is slid further, roller 83 presses button 71A and slides the shutter 68. The other roller 84 is pressed by the button 71B and the shutter 68 and turned. As shown by the arrow H, the shutter 68 is slid and the cartridge opening is exposed. When the shutter 68 is completely opened as described above, the optical head 11 is positioned closer to the optical disk 12 from beneath the cartridge 60 in Fig. 26 and processing (such as a focus search) is executed.

If the cartridge 60 is ejected, the shutter 68 is pressed by the other roller 84, the button 71B is pressed and the shutter is restored.

If a single-sided disk is housed in the cartridge 60, the upper case 63 and the lower case 64 are formed so that the slide of the shutter 68 in one direction is limited and hereby, wrong installation can be effectively avoided.

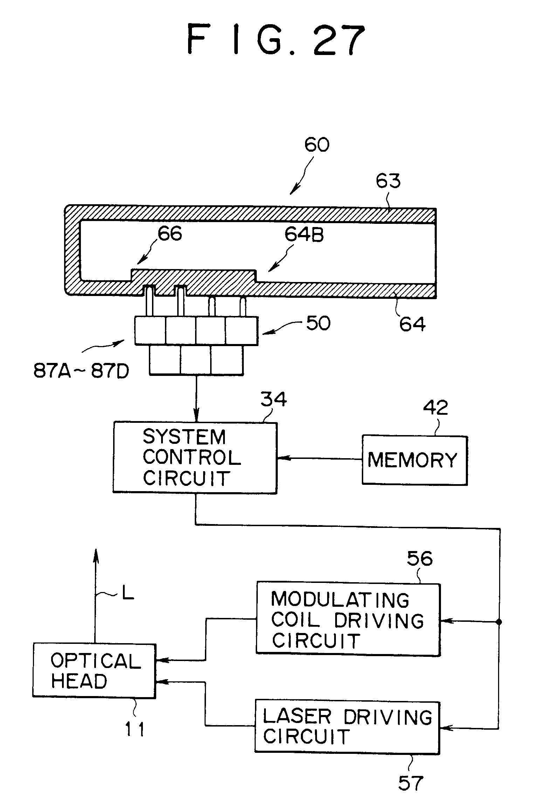

Fig. 27 is a diagram showing the relationship between an identification area 63B or 64B and the optical disk unit 10. A disk discriminator 50 is formed in the optical disk unit by plural switches 87A to 87D aligned with the concave portions 66 in the identification area 64B (see Fig. 17).

That is, these switches 87A to 87D are turned on or off according to whether a respective concave portion 66 exists in the identification area 64B, thereby producing, for example, a 4-valued discriminant signal which is output to the system control circuit 34.

When the cartridge 60 is inserted in tray 85, the system control circuit 34 (Fig. 27) drives a driving mechanism to load the cartridge 60 and discriminates the type of optical disk that is housed in the cartridge 60 based upon the discriminant signal from, the disk discriminator 50. The system control circuit 34 retrieves from memory 42 the corresponding reference laser beam luminous energy level based upon the discriminant result and sets the laser driving circuit 57 accordingly. The memory 42 stores reference laser beam luminous energy levels for various types of optical disks.

As a result, the laser beam L of luminous energy corresponding to the type of optical disk is omitted. For a writing operation, the system control circuit sets the luminous energy of the laser beam and, assuming the optical disk is sensed as being a magneto-optical disk, drives the modulating coil driving circuit 56 to apply a modulating magnetic field to the laser beam irradiated position.

In the mastering device 1 shown in Fig. 2, a groove is formed by rotating the disk base 2 and irradiating a laser beam L spirally from the inner diameter toward the outer diameter with a wobble signal WB. The interval between adjacent grooves formed by exposure to the laser beam L is approximately equal to the width of the groove and, as a result, an optical disk is formed for land-groove recording with a data storage capacity of 8 GB or more with track recording density of approximately 0.21μm/bit.

In the mastering device 1, the address signal generating circuit 6 generates the address data ID, the value of which sequentially varies with the rotation of the disk base 2, to which synchronizing data and other data are added for recording in address area AR2. This data is modulated and is synthesized with a wobble signal WB in the synthesizing circuit 8 and, supplied to the driving circuit 5. The meander of a groove is interrupted at predetermined angular intervals, and address data composed of a pit sequence is recorded at the head of the sector structure (Fig. 4).

In the optical disk ultimately produced from the disk base 2, even if address data cannot be correctly read due to dust or other aberrations, each sector nevertheless can be correctly accessed by interpolation based upon the meander of a groove. Therefore, there is low redundancy of the address data and an address recorded on the optical disk can be positively detected.

The disk base 2 is zoned concentrically by switching the frequency of the wobble signal WB in the mastering device 1 and the number of sectors in a track is sequentially increased from a zone on the inner diameter toward a zone on the outer diameter. The technique of zone CLV is used thereby enhancing the rate of access to the information on the disk.

Cross talk from an adjacent track can be effectively avoided and address data can be properly read by dividing the address area AR2 into two areas and respectively allocating address data in one area to a sector in the following groove and allocating address data in the other area to a sector in the following land.

In producing an optical disk from the disk base 2 that has been generated by the mastering device 1, a laser beam is irradiated on the information record side of the optical disk, as shown in Fig. 5. The light transmissive layer is approximately 0.1 mm thick. When the laser beam is transmitted through the light transmissive layer via an optical system with a large numerical aperture, the effect of skew is effectively avoided and data can be readily recorded on or read from the information record side.

Spindle control and other servo processing is based upon the meander of a groove formed on the optical disk 12. A high precision clock CK based upon the meander of the groove is generated in PLL circuit 35 and the timing of a sector is detected by the cluster counter 38 shown in Fig. 6.

In the optical disk unit shown in Figs. 7 and 8, the regenerative signal RF (the signal level of which varies according to the luminous energy of the returned light) is produced by the optical head 11 when a laser beam with the wavelength of 650 nm irradiates the optical disk via the objective lens 17 (the working distance DW of which is set to 560μm, with the numerical aperture of 0.78). The optical head also produces a regenerative signal MO (the signal level of which varies according to the plane of polarization of the returned light), a push-pull signal PP (the signal level of which varies according to the displacement of the laser beam irradiated position) for a groove or a pit sequence and a focus error signal FE (the signal level of which varies according to the quantity of defocus).

The wobble signal WB is extracted from the push-pull signal PP by the wobble signal detecting circuit 39, is digitized, and edge information is extracted therefrom. In the following PLL circuit 35, the phase of the signal S1 provided with the extracted edge information and the phase of an output signal CK from the frequency divider 35B are locked to generate a read/write clock R/W CK.

The edge information, which is acquired by digitizing the wobble signal, is provided with correct phase information because the wobble signal WB is based upon a single frequency carrier signal. A high precision read/write clock R/W CK is generated by locking to the phase of the edge information.

The read/write clock R/W CK is counted by the cluster counter 38 at a timing synchronized with a frame detected from the address area AR2 in the address detecting circuit 37 so as to establish the timing of writing/reading in the recording/reproducing circuit 53 (Fig. 1). Consequently, the laser beam irradiated position can be precisely determined and timing for writing and other operations can be set accurately. Therefore, user data can be recorded with high density. Even if the timing needed for synchronizing with a frame cannot be correctly detected in the address detecting circuit 37 because of dust or other aberrations, the correct timing can be determined by counting the read/write clock R/W CK output from the PLL circuit 35 by the cluster counter 38.

In the optical disk unit 10 shown in Fig. 1, a video signal and an audio signal are compressed by the MPEG format in the encoder 51 and converted to user data DU which is assembled in units of an ECC block by controlling the recording timing as described above. If the optical disk 12 is a magneto-optical disk, a modulating magnetic field is applied to the laser beam irradiated position based upon the data in the ECC block by the modulating coil driving circuit 56 while the luminous energy of the laser beam emitted from the optical head 11 is intermittently increased at a timing synchronized with the read/write clock R/W CK. Thus, a mark having the maximum run length of 2T and the minimum run length of T is generated. User data DU is recorded with a track recording density of 0.21μm/bit and three hours of video and audio signals may be recorded.

If the optical disk 12 is a phase-change type or a write-once type disk, the luminous energy of the laser beam is intermittently switched by the laser driving circuit 57 based upon the data in the ECC block at a timing synchronized with the read/write clock R/W CK. As a result, a similar pit sequence is formed and user data DU is recorded with a track recording density of 0,21μm/bit and three hours of video and audio signals may be recorded.

The user data DU in the ECC block is allocated to four sequential sectors and is recorded. Data can be accurately recorded in a sector by precisely detecting the timing needed to start recording according to a high-precision clock and by detecting the correct timing by interpolation even if dust or other particles are present.

In reading, a sector is detected and after the regenerative signal RF or MO acquired by the optical head 11 is digitized, a regenerative clock is generated to acquire the data which is decoded. The S-N ratio of the regenerative signal MO acquired from the magneto-optical disk is smaller, compared with that of a regenerative signal RF acquired from a pit sequence. However, as the address area AR2 composed of a pit sequence is radially formed in each zone, cross talk for the regenerative signal MO from the pit sequence is effectively avoided.

User data is input or output between the encoder 51 and the decoder 52 via the memory 54, and user data is intermittently recorded on or read from the optical disk at a data transfer rate that is faster than the data transfer rate of the encoder 51 and the decoder 52. User data is recorded in units of clusters to provide a sufficient seek time. Even if detracking occurs due to vibration and other aberrations, consecutive video and audio signals can be recorded or read without interruption.

When a multichannel mode (in which two channels of a video signal and an audio signal are simultaneously processed) or an after-recording mode are selected by the user, the rotational speed of the optical disk 12 is switched to twice the normal rotational speed. As consecutive video signals and audio signals are intermittently recorded on or read from the optical disk via the memory 54, sufficient idle time is introduced for access to the optical disk 12. The optical disk unit allocates the idle time to the recording or reading of data in another channel or to a seek operation by the optical head for the simultaneous processing of two channels of video and audio signals.

As the optical disk 12 is accessed as described above, the signal level of the regenerative signal RF or MO may vary due to small dust and other particles on the surface of the optical disk 12. By accessing the optical disk through a light transmissive layer whose thickness is about 0.1 mm via an optical system with a large numerical aperture, the error rate may deteriorate. To avoid this, the optical disk shown in Fig. 15 is housed in the cartridge 60 so that the disk cannot be extracted. The cartridge prevents the adhesion of dust and other particles to the disk even when loaded into the disk unit 10.

In cartridge 60, the optical disk 12 is exposed to the laser beam by sliding the shutter 68 (Fig. 17) and exposing the disk through openings 63A and 64A respectively formed in the upper case 63 and the lower case 64. Clearance between the shutter 68 and the upper case 63 or the lower case 64 is limited by the buffer members 63D and 64D arranged so that the openings 63A and 64A are surrounded and the invasion of dust and other particles is effectively avoided (as shown in Fig. 17).

In the cartridge 60 shown in Figs. 19 to 25, the shutter is formed so that it does not slide if engagement between the second stopper 79A or 79B and the shutter 68 is not released by pressing the button 71A or 715 after the regulation of the motion of the second stoppers 79A and 79B by the first stoppers 75A and 75B is released by pressing the buttons 70A and 70B.

Shutter 68 is inhibited from sliding if the buttons 70A, 71A or 70B, 71B are not operated in sequence. Hence, the openings 63A and 64A are exposed only when necessary, thereby reducing the invasion of dust and other particles.

When the optical disk shown in Fig. 26 is loaded in tray 85, a driving mechanism operated under the control of the system control circuit 34, slides the cartridge into the tray such that the buttons 70A and 70B are pressed by the projections 82A and 82B on the tray. Roller 83 then presses the button 71A followed by the shutter 68 to slide the shutter and expose disk 12 through openings 63A and 64A for access by the optical head 11.

As shown in Fig. 27, disk discriminator 50 detects whether the indicia formed as respective concave portions 66 are present in the identification area 63B or 64B on cartridge 60 in order to determine the type of optical disk within the cartridge (e.g. whether the disk is a thermomagnetic disk, a write over disk, a phase change disk, and so on.

If the optical disk 12 is a magneto-optical disk, the modulating coil driving circuit 56 and the laser driving circuit 57 both are used to record user data DU by thermomagnetic recording. If the optical disk is a phase-change type optical disk or a write-once optical disk, only the laser driving circuit need be used to record the user data. The energy of the laser beam L which irradiates the optical disk is determined by the type of each optical disk, the energy levels for which are stored in the memory 54.

According to the present invention, data can be recorded selectively on an optical disk by thermomagnetic recording or by local heating from a laser beam without using thermomagnetic recording, depending upon the identification of the optical disk as represented by the concave portions formed in the cartridge 60. The operation of the modulating coil driving circuit 56 and the laser driving circuit 57 are controlled, depending upon such identification.

Desired data can be also recorded on a double-sided magneto-optical disk or non-magnetic type optical disk.

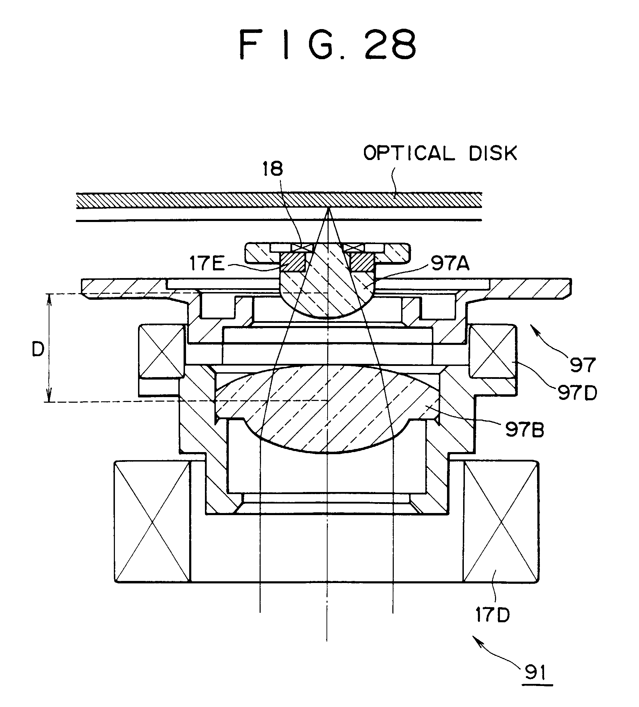

Fig. 28 is a sectional view of another embodiment of an objective lens in an optical head 91, wherein the same reference numbers are used to identify the same parts shown in Fig. 8.

In the optical head 91, an objective lens 97 is formed of a first lens 97A and a second lens 97B similar to the objective lens 17 in the Fig. 8 embodiment. The first lens 97A is displaceable from the second lens 97B by an actuator 97D so that the distance D between lenses 97A and 97B can be varied. The same numerical aperture and working distance of the Fig. 8 embodiment are attained by the Fig. 28 embodiment. Alternatively, the Fig. 28 embodiment can set the numerical aperture and working distance required for DVD for compact discs and the like, depending upon the type of optical disk with which the optical head is used. The disk type may be discriminated in the manner described above.

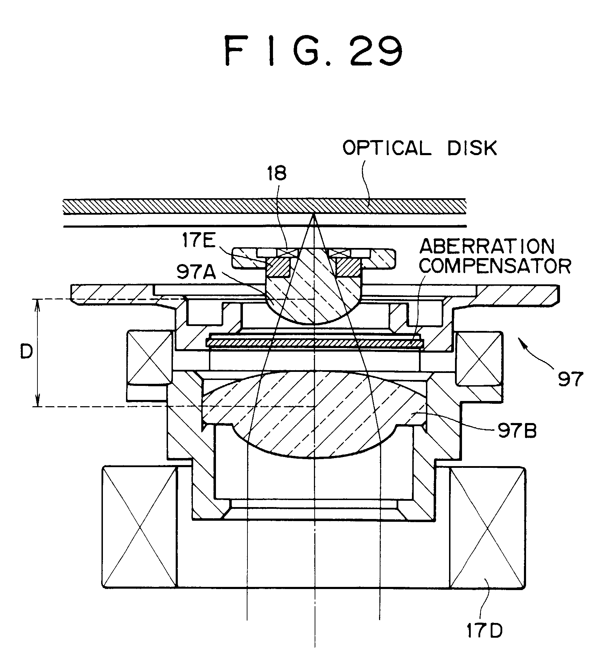

Another embodiment of the optical head is shown in Fig. 29, including an aberration correcting plate for correcting aberrations that may be caused by switching the numerical aperture.

In the above described embodiments, the optical disk housed in a cartridge is described. However, the present invention is not limited to this and if the effect of dust and other particles can be avoided without using a cartridge, the optical disk unit of the present invention may receive the optical disk placed directly on the loading tray.

As described above, the optical disk is identified based upon the concave portions formed in the cartridge. However, the present invention is not limited to this and, for example, the optical disk may be identified by information preformatted in a react-in area, or by the thickness of the light transmissive layer which may be measured as a function of the peak of a focus error signal from the surface of the light transmissive layer and the peak of a focus error signal acquired from the information record side, or by the luminous energy of returned light reflected from the disk.

In the above embodiments, 6 kbytes of data are recorded in one address area AR2 defined by a pit sequence. However, other amounts of data may be recorded; and the address may be represented by the meander of a groove in place of a pit sequence. Also, information may be recorded as land-groove recordings or simply groove recordings.

While the foregoing has described the meandering of the whole groove by a wobble signal, only one edge of the groove may meander or, alternatively, both edges of the groove may meander by different wobble signals.

Grooves have been described as being formed so that the track pitch is 0.5μm in land-groove recording. However, the track pitch may be set to 0.64μm or less by setting the appropriate track pitch and track recording density.

The thickness of the light transmissive layer of the disk has been described as 0.1 mm. However, thermomagnetic recording may be used with the thickness of the light transmissive layer set at 177μm or less. The thickness of a light transmissive layer is recommended to be at least 10μm.

The foregoing has described data recorded with a track recording density of 0.21μm/bit; but the track recording density may be 0.23μm/bit while providing the same capacity as described above. The shortest bit length and the shortest mark length may be 0.3μm; and the maximum run length may be 3T, the minimum run length may be 1T and the shortest bit length and the shortest mark length may be 3/2 bit.

The laser beam has been described with a wavelength of 650 nm emitted by an optical system with a numerical aperture of 0.78. The optical system should have a large numerical aperture; and with a numerical aperture of 0.76 or more, the working distance is 560μm or less.

The present invention is applicable both to a recordable optical disk and to a read-only optical disk.

Although preferred embodiments of the present invention and modifications thereof have been described in detail herein, it is to be understood that this invention is not limited to those precise embodiments and modifications, and that other modifications and variations may be affected by one skilled in the art without departing from the scope of the invention as defined by the appended claims.

**Claims**

1. An optical disk apparatus for accessing an optical disk selected from a number of types, comprising:

   an optical head for irradiating a laser beam on said optical disk with a numerical aperture of at least 0.70 and a working distance of no greater than 560μm so as to obtain a signal therefrom;
   means for identifying the type of said optical disk and outputting the result of the identification; and
   a signal processing unit for processing said signal obtained from said optical head based upon said result of the identification so as to recover data recorded on said optical disk.

2. An optical disk apparatus according to claim 1, wherein said optical head receives returned light admitting of luminous energy and a plane of polarization from said laser beam reflected from said optical disk and outputs a first regenerative signal having a signal level which varies according to the plane of polarization of said returned light, and a second regenerative signal having a signal level which varies according to the luminous energy of said returned light; and wherein said processing unit selectively processes said first or second regenerative signal based upon said result of the identification by said optical disk discriminating unit.

3. An optical disk apparatus for accessing data recorded on an optical disk selected from a number of types of optical disks, comprising:

   an optical head located on an irradiating side of the optical disk for irradiating a laser beam with luminous energy on said optical disk and receiving returned light acquired from said optical disk and having a plane of polarization so as to produce a signal therefrom;
   a magnetic field generating unit located on said irradiating side of the optical disk for applying a modulating magnetic field to said laser beam irradiated on said optical disk;
   means for identifying the type of said optical disk and outputting the result of the identification;
   a control unit for controlling the luminous energy of said laser beam based upon said result of the identification by said optical disk discriminating unit and controlling the modulation of said modulating magnetic field applied by said magnetic field generating unit based upon said result of the identification; and
   a processing unit for processing said signal based upon said result of the identification so as to recover the data recorded on said optical disk.

4. An optical disk apparatus according to Claim 3, wherein said optical head generates a first regenerative signal having a signal level which varies according to the plane of polarization of said returned light, and a second regenerative signal having a signal level which varies according to the luminous energy of said returned light; and wherein said processing unit selectively processes said first or second regenerative signals based upon said result of the identification.

5. An optical disk apparatus according to Claim 3, wherein:

   said optical head includes a predetermined objective lens spaced from and on one side of said optical disk; and
   said magnetic field generating unit is a coil arranged on the same side of said optical disk as said objective lens.

6. An optical disk apparatus according to Claim 3, wherein:
   said optical head comprises an optical system with a numerical aperture of 0.70 or more and a working distance of 560μm or less.

7. An optical disk apparatus according to Claim 3, wherein:

   said types of optical disks include a first type for recording desired data by thermomagnetic recording and a second type for recording desired data by local heating from said laser beam; and
   wherein said identification unit identifies said first or said second type of optical disks.

8. An optical disk apparatus according to Claim 7, wherein:
   said second type of optical disk is a phase-change type optical disk.

9. An optical disk apparatus according to Claim 7, wherein:
said second type of optical disk is a write-once optical disk.

10. An optical disk apparatus according to Claim 3, wherein:
said identification unit identifies a read-only optical disk.

11. An optical disk apparatus according to Claim 3, wherein:

said optical disk is housed in a cartridge with an identification portion formed thereon; and
said identification unit identifies said optical disk based upon said identification portion formed on said cartridge.

12. A disk cartridge for housing an optical disk which is one of a number of types of optical disks, said optical disk being accessible by an optical system including an optical head which irradiates a laser beam on said optical disk to produce a signal from a reflected beam, an optical disk discriminating unit for identifying the type of optical disk and a signal processing unit for processing said signal produced by said optical head based upon the identification by said optical disk discriminating unit, said disk cartridge comprising:

a disk cartridge housing for holding said optical disk therein, and
an identification portion provided on said disk cartridge housing for identifying the type of said optical disk.

13. A disk cartridge according to claim 12, wherein said identification portion identifies whether the optical disk is a first type of optical disk for recording desired data by thermomagnetic recording or a second type of optical disk for recording desired data by local heating caused by irradiating said optical disk with a laser beam.

14. An optical disk apparatus for accessing data recorded on an optical disk selected from a number of types, comprising:

optical head means for irradiating a laser beam on said optical disk with a numerical aperture of 0.70 or more and a working distance of 560μm or less to produce a signal from reflection of said laser beam;
optical disk discriminating means for identifying the type of said optical disk and outputting the result of the identification; and
signal processing means for processing said signal produced by said optical head means based upon said result of the identification by said optical disk discriminating means so as to recover the data recorded on said optical disk.

15. An optical disk apparatus according to claim 14, wherein said optical head means receives returned light of said laser beam reflected from said optical disk, and having luminous energy and a plane of polarization, to output a first regenerative signal having a signal level which varies according to the plane of polarization of said returned light, and a second regenerative signal, having a signal level which varies according to the luminous energy of said returned light; and wherein said processing means selectively processes said first or second regenerative signal based upon said result of the identification by said optical disk discriminating means.

16. An optical disk apparatus for accessing data recorded on an optical disk selected from a number of types of optical disks, comprising:

optical head means located on an irradiating side of the optical disk for irradiating a laser beam with luminous energy on said optical disk and receiving returned light acquired from said optical disk and having a plane of polarization so as to produce a signal therefrom;
magnetic field generating means located on said irradiating side of the optical disk for applying a modulating magnetic field to said laser beam irradiated on said optical disk;
optical disk discriminating means for identifying the type of said optical disk and outputting the result of the identification;
control means for controlling the luminous energy of said laser beam based upon said result of the identification by said optical disk discriminating means and controlling the modulation of said modulating magnetic field applied by said magnetic field generating means based upon said result of the identification; and
processing means for processing said signal based upon said result of the identification so as to recover the data recorded on said optical disk.

17. An optical disk apparatus according to Claim 16, wherein said optical head means generates a first regenerative signal having a signal level which varies according to the plane of polarization of said returned light, and a second regenerative signal having a signal level which varies according to the luminous energy of said returned light; and wherein said processing means selectively processes said first or second regenerative signals based upon said result of the identification.

18. An optical disk apparatus according to Claim 16, wherein:

said optical head means includes a predetermined objective lens spaced from and on one side of said optical disk; and
said magnetic field generating means is a coil arranged on the same side of said optical disk as said objective lens.

19. An optical disk apparatus according to Claim 16, wherein:
said optical head means comprises an optical system with a numerical aperture of 0.70 or more and a working distance of 560µm or less.

20. An optical disk apparatus according to Claim 16, wherein:

said types of optical disks includes a first type for recording desired data by thermomagnetic recording and a second type for recording desired data by local heating from said laser beam; and
wherein said identification means identifies said first or said second type of optical disks.

21. An optical disk apparatus according to Claim 20, wherein:
said second type of optical disk is a phase-change type optical disk or a write-once optical disk.

22. An optical disk apparatus according to Claim 20, wherein:
said second type of optical disk is a write-once optical disk.

23. An optical disk apparatus according to Claim 16, wherein:
said identification means identifies a read-only optical disk.

24. An optical disk apparatus according to Claim 16, wherein:

said optical disk is housed in a cartridge with identification portion means formed thereon; and
said identification means identifies said optical disk based upon said identification portion means formed on said cartridge.

25. A disk cartridge for housing an optical disk which is one of a number of types of optical disks, said optical disk being accessible by an optical system including optical head means which irradiates a laser beam on said optical disk to produce a signal from a reflected beam, optical disk discriminating means for identifying the type of optical disk, and signal processing means for processing said signal produced by said optical head means based upon the identification by said optical disk discriminating means, said disk cartridge comprising:

disk cartridge housing means for holding said optical disk therein; and
identification portion means provided on said disk cartridge housing means for identifying the type of said optical disk.

26. A disk cartridge according to claim 25, wherein said identification portion means identifies whether the optical disk is a first type of optical disk for recording desired data by thermomagnetic recording or a second type of optical disk for recording desired data by local heating resulting from irradiation by said laser beam.

27. An optical disk accessing method for accessing an optical disk selected from a number of types, comprising the steps of:

irradiating a laser beam on said optical disk using an optical head having a numerical aperture of 0.70 or more and a working distance of 560µm or less so as to obtain a signal therefrom;
identifying the type of said optical disk and outputting the result of the identification; and

processing said signal obtained from irradiating said optical head based upon said result of the identification so as to recover data recorded on said optical disk.

28. An optical disk accessing method according to claim 27, further comprising the steps of receiving from said laser beam reflected from said optical disk returned light admitting of luminous energy and a plane of polarization, generating a first regenerative signal having a signal level which varies according to the plane of polarization of said returned light, generating a second regenerative signal having a signal level which varies according to the luminous energy of said returned light, and selectively processing said first or second regenerative signal based upon said result of the identification.

29. An optical disk accessing method for accessing data recorded on an optical disk selected from a number of types of optical disks, comprising the steps of:

irradiating a laser beam with luminous energy on said optical disk;
receiving returned light reflected from said optical disk and having a plane of polarization to produce a signal therefrom;
applying a modulating magnetic field to said laser beam irradiated on said optical disk;
identifying the type of said optical disk and outputting the result of the identification;
controlling the luminous energy of said laser beam based upon said result of the identification and controlling the modulation of said applied modulating magnetic field based upon said result of the identification; and
processing said signal based upon said result of the identification so as to recover the data recorded on said optical disk.

30. An optical disk accessing method according to Claim 29, further comprising the steps of generating a first regenerative signal having a signal level which varies according to the plane of polarization of said returned light, and a second regenerative signal having a signal level which varies according to the luminous energy of said returned light and selectively processing said first or second regenerative signals based upon said result of the identification.

31. An optical disk accessing method according to Claim 29, wherein said step of identifying identifies a first type of optical disk for recording data by thermomagnetic recording and a second type of optical disk for recording data by local heating from said laser beam.

32. An optical disk accessing method according to Claim 31, wherein said step of identifying identifies said second type of optical disk as a phase-change type optical disk.

33. An optical disk accessing method according to Claim 31, wherein said step of identifying identifies said second type of optical disk as a write-once optical disk.

34. An optical disk accessing method according to Claim 29, wherein said step of identifying identifies a read-only optical disk.

# FIG. 1

EP 0 880 133 A1

# FIG. 2

EP 0 880 133 A1

# FIG. 3

LAND

B

A

SECTOR

SECTOR

Z1 ZO

Zn-1

Zn

2

ONE SECTOR

LAND

LAND

PIT

GROOVE AR1 AR2 AR1 GROOVE

EP 0 880 133 A1

EP 0 880 133 A1

ONE SECTOR

AR2    AR1    GROOVE

F I G. 4A

PIT

LAND

| 62 | 0.5 | 62 | 0.5 | 8 | 24 | 25 | 2 | 9672 | 2 | 52 | 16 |
|---|---|---|---|---|---|---|---|---|---|---|---|
| HEADER | GAP | HEADER | GAP | GAP | GUARD | VFO | | USER DATA | PA | GUARD | BUFFER |

F I G. 4B

SYNCHRONIZING

SECTOR STRUCTURE

SECTOR HEADER

| SM | VFO | AM | ID | VFO | AM | ID | PA |
|---|---|---|---|---|---|---|---|
| 4 | 26 | 1 | 6 | 16 | 1 | 6 | 1 |

F I G. 4C1

| SM | VFO | AM | ID | VFO | AM | ID | PA |
|---|---|---|---|---|---|---|---|
| 4 | 26 | 1 | 6 | 16 | 1 | 6 | 1 |

F I G. 4C2

# F I G. 5A

PREGROOVE

OPTICAL DISK

CARTRIDGE

# F I G. 5B

PREGROOVE

SINUOUS CYCLE

LASER BEAM SPOT

DISK SUBSTRATE

LIGHT TRANSMISSIVE LAYER

INFORMATION RECORDED LAYER

# FIG. 6

EP 0 880 133 A1

# F I G. 7

INFORMATION
RECORDED LAYER

12

DISK SUBSTRATE

LIGHT TRANSMISSIVE
LAYER

A

18

17

19

16

15

SL

14

13

20

25

26

27

29

30

MO

21

22

23

RF, PP, FE

28

11

EP 0 880 133 A1

# FIG. 8

EP 0 880 133 A1

# F I G. 9A

# F I G. 9B

# F I G. 9C

```
        ( START )— SP1
             │
             ▼
          ╱──────────╲      SP2
        ╱   AFTER RECORDING  ╲ ── NO ──────────────────┐
        ╲   AND OTHERS ?     ╱                          │
          ╲──────────╱                                  │
             │ YES                                      │
             │              SP5                         │     SP3
             ▼                                          ▼
  ┌──────────────────────────┐          ┌──────────────────────────────┐
  │ SET ROTATIONAL SPEED IN  │          │ RECORD / REPRODUCE BY ZCLV    │
  │ RECORDING / REPRODUCING  │          └──────────────────────────────┘
  │ IMMEDIATELY BEFORE IN    │                         │
  │ REPRODUCING              │                         │
  └──────────────────────────┘                         │
             │              SP6                         │
             ▼                                          │
  ┌──────────────────────────┐                         │
  │ SET ROTATIONAL SPEED OF  │                         │
  │ CORRESPONDING ZONE IN    │                         │
  │ RECORDING                │                         │
  └──────────────────────────┘                         │
             │                                          │
             ◄──────────────────────────────────────────┘
             ▼
         ( END )— SP4
```

EP 0 880 133 A1

# F I G. 11

| 2048 BYTES | 16 BYTES |
|---|---|
| USER DATA | SECTOR ADDRESS ERROR DETECTING CODE |

SECTOR DATA BLOCK

# F I G. 12

ECC DATA BLOCK

# F I G. 13

ONE FRAME | ONE FRAME

2 BYTES | 91 BYTES | 2 BYTES | 91 BYTES

208

| FS | ECC DATA BLOCK | FS | ECC DATA BLOCK |

416 FRAMES

FRAME STRUCTURE

# F I G. 14

# F I G. 15

BONDED PART

63D
63A
63

61A
61
61B

ROTATIONAL
DIRECTION

60

12

62A
62
62B

BONDED PART

64A
64
64D
65

# F I G. 16

60

11
17A
12
61B , 62B
11
17A
61A , 62A

ROTATIONAL
DIRECTION

61, 62
64, (63)

F I G. 17

# F I G. 18

68

63D, (64D)

63A, (64A)

12

63, (64)

60

# F I G. 19

# F I G. 20

# F I G. 21

# F I G. 22

# F I G. 23

# F I G. 24

# F I G. 25

F I G. 26

# F I G. 27

SYSTEM CONTROL CIRCUIT

MEMORY

MODULATING COIL DRIVING CIRCUIT

OPTICAL HEAD

LASER DRIVING CIRCUIT

# F I G. 28

OPTICAL DISK

18

17E        97A

D

97
97D

97B

17D

91

# F I G. 29

OPTICAL DISK

18

17E

97A

ABERRATION
COMPENSATOR

D

97

97B

17D

European Patent
Office

**EUROPEAN SEARCH REPORT**

Application Number

EP 98 30 3868

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 5 276 674 A (TANAKA SHINICHI) 4 January 1994<br>* column 2, line 40 – column 2, line 52 * | 1,14,27 | G11B19/12 |
| A | * column 3, line 26 – column 3, line 57 * | 3,6,16, 19 | |
| | --- | | |
| Y | US 5 559 769 A (ANDO NOBUHIKO  ET AL) 24 September 1996 | 1,14,27 | |
| A | * the whole document * | 2,15,28 | |
| X | | 3-5, 10-12, 16-18, 23-25, 29,30,34 | |
| | --- | | |
| A | PATENT ABSTRACTS OF JAPAN<br>vol. 018, no. 250 (P-1736), 12 May 1994<br>& JP 06 028676 A  (MATSUSHITA ELECTRIC IND CO LTD), 4 February 1994<br>* abstract * | 1-8, 11-18, 20,21, 24-32 | |
| | --- | | TECHNICAL FIELDS SEARCHED       (Int.Cl.6) |
| A | PATENT ABSTRACTS OF JAPAN<br>vol. 096, no. 009, 30 September 1996<br>& JP 08 124285 A  (SONY CORP), 17 May 1996<br>* abstract * | 1-7, 10-18, 20, 23-31,34 | G11B |
| | --- | | |
| A | PATENT ABSTRACTS OF JAPAN<br>vol. 016, no. 050 (P-1308), 7 February 1992<br>& JP 03 250451 A  (TOSHIBA CORP), 8 November 1991<br>* abstract * | 1-7,9, 11-18, 20-22, 24-31,33 | |
| | ----- | | |

The present search report has been drawn up for all claims

| Place of search | Date of completion of the search | Examiner |
|---|---|---|
| THE HAGUE | 28 August 1998 | Benfield, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document